# EUROPEAN PATENT APPLICATION

(11) **EP 4 664 912 A1**
(43) Date of publication of application: **17.12.2025**
(21) Application number: 24753565.1
(22) Date of filing: 02.02.2024
(51) Int. Cl.: H04N 23/68, H04N 23/54, H04N 23/55, G03B 5/06, G03B 17/12, G03B 3/10, G03B 13/36, H02K 41/035

(54) **CAMERA ACTUATOR AND CAMERA MODULE COMPRISING SAME**

(30) Priority: 10.02.2023 KR 20230018026; 16.02.2023 KR 20230020540
(71) Applicant: LG INNOTEK CO. LTD, Gangseo-gu Seoul 07796 (KR)
(72) Inventor: KIM, Han Saem, Seoul 07796 (KR); KWON, Han Ul, Seoul 07796 (KR); PARK, Dong Young, Seoul 07796 (KR); PARK, Dong Joon, Seoul 07796 (KR)
(74) Representative: DREISS Patentanwälte PartG mbB
(86) International application number: PCT/KR2024/001610
(87) International publication number: WO 2024/167236

(57) **Abstract**

Disclosed in an embodiment of the present invention is a camera module comprising a first actuator, a second actuator, and a circuit board that are sequentially arranged in the optical axis direction, wherein the circuit board includes: a first circuit board unit on which an image sensor is loaded; and a second circuit board unit which is connected to the first circuit board and which extends in the optical axis direction, and the second circuit board unit overlaps the first actuator and the second actuator in the direction perpendicular to the optical axis direction so as to be connected to the first actuator.

## Description

### [Technical Field]

The present invention relates to a camera actuator and a camera module including the same.

### [Background Art]

Cameras are devices which capture photos or videos of subjects and are installed in portable devices, drones, vehicles, and the like. Camera modules may have an image stabilization (IS) function of correcting or preventing the image shaking caused by a user's movement, an auto-focus function of automatically adjusting a gap between an image sensor and a lens to align the focal length of the lens, and a zoom function of increasing or decreasing the magnification of a distant subject to take a picture using a zoom lens to improve the quality of the images.

Due to the trend of miniaturization of camera devices, efficient electrical connections between circuit boards in the camera devices are important.

Additionally, structures for reducing assembly and reliability defects in miniaturized camera modules are required.

### [Disclosure]

### [Technical Problem]

A technical problem to be solved by embodiments of the present invention is to provide a camera actuator and a camera module having improved assemblability and enhanced reliability through a connector portion even with a long stroke.

Embodiments according to the present invention may provide a camera actuator and a camera module in which assembly tolerance is eliminated and the inflow of foreign matter is suppressed by controlling a structure of a circuit board.

Embodiments according to the present invention may provide a camera actuator and a camera module applicable to ultra-slim, ultra-small, and high-resolution cameras.

In addition, a technical problem to be solved by the present invention is to provide a camera actuator and a camera device in which efficient connection between a main board and a circuit board for an actuator in a camera device including the actuator is possible.

Another technical problem to be solved by the present invention is to provide a camera actuator applicable to ultra-slim, ultra-small and high-resolution cameras.

The problems to be solved by the embodiments are not limited thereto, and purposes or effects which may be grasped from solutions or embodiments of the problems to be described below are also included.

### [Technical Solution]

A camera module according to an embodiment of the present invention includes: a first actuator, a second actuator, and an image sensor that are sequentially disposed in an optical axis direction; and a circuit board disposed near the first actuator and the second actuator, in which the circuit board includes: a first circuit board portion on which the image sensor is seated; and a second circuit board portion connected to the first circuit board portion and extending in the optical axis direction, and the second circuit board portion overlaps the first actuator and the second actuator in a direction perpendicular to the optical axis direction and is connected to the first actuator.

A length of the first actuator in the direction perpendicular to the optical axis direction may be smaller than a length of the second actuator in the direction perpendicular to the optical axis direction.

The second circuit board portion may include a first region located at an outermost side, and a second region inside the first region.

The second circuit board portion may include a common board, a first individual board disposed in the first region, and a second individual board disposed in the second region.

The first individual board may have a length in the optical axis direction that is 0.5 times or more a length of the common board in the optical axis direction in the first region.

The second individual board may have a length in the optical axis direction that is 0.5 times or less a length of the common board in the optical axis direction in the second region.

The circuit board may include a third circuit board portion extending in the direction perpendicular to the optical axis direction from the second circuit board portion and including a first connector, and the second circuit board portion may include a second connector that overlaps and is connected to the first actuator in the direction perpendicular to the optical axis direction.

The first actuator may include a first board portion disposed on a side surface, and the second actuator may include a second board portion disposed on a side surface.

The first board portion may be pin-coupled and electrically connected to the second connector.

The first actuator may include a first driving unit disposed on the first board portion, the first driving unit may be disposed spaced apart from the second connector, and the first driving unit may be disposed offset from the second connector in the direction perpendicular to the optical axis direction.

The second connector may be disposed at an end of the second circuit board portion in the optical axis direction.

The second circuit board portion may include a terminal groove and a coupling groove disposed in the first region, and the first region may partially overlap the first actuator in the direction perpendicular to the optical axis direction.

The second region may include a 2-1 region located at an innermost side, and a 2-2 region disposed between the first region and the 2-1 region in the direction perpendicular to the optical axis direction.

The 2-1 region may come into contact with the first actuator.

The camera module may include a cover surrounding the first actuator, the second actuator, and the circuit board, and the cover may be asymmetrical with respect to the optical axis, and the cover may include a first cover hole disposed in an upper surface, and a second cover hole adjacent to the second circuit board portion.

A camera device according to an embodiment of the present invention includes: an image sensor; a first circuit board electrically connected to the image sensor; a first camera actuator; and a second circuit board electrically connected to the first camera actuator, in which one end of the first circuit board includes a plurality of first pads extending in a first direction and disposed spaced apart from each other in a second direction perpendicular to the first direction, one end of the second circuit board includes a plurality of second pads extending in the first direction and disposed spaced apart from each other in the second direction, the plurality of first pads and the plurality of second pads correspond in a one-to-one manner, at least some regions of the plurality of first pads and at least some regions of the plurality of second pads are disposed to overlap each other in a third direction perpendicular to the first direction and the second direction, the plurality of first pads and the plurality of second pads are soldered, a hole is formed in each of the plurality of first pads, and the hole is disposed in each of the plurality of second pads.

A sum of lengths in the first direction of the first pads and the second pads disposed to overlap each other in the third direction among the plurality of first pads and the plurality of second pads may be greater than lengths in the first direction of the first pads and the second pads in a state of overlapping each other.

One end of the first circuit board may be disposed on one end of the second circuit board.

Solder may be disposed in a hole of the first pad.

The solder may be disposed in the hole, on lower surfaces of the plurality of first pads, and on upper surfaces of the plurality of second pads.

A width of the hole may be 40 to 70% of a width of each of the plurality of first pads.

One end of the first circuit board may be a flexible printed circuit board (FPCB).

The first circuit board may include an FPCB, a first region of the FPCB may be disposed to overlap the second circuit board in the first direction, a second region of the FPCB may be disposed to overlap the second circuit board in the third direction, and the first pad may be disposed in the second region of the FPCB.

The first direction may be an optical axis direction.

The first camera actuator may be an optical image stabilization (OIS) actuator.

The first circuit board may include a 1-1 circuit board disposed to extend in a direction perpendicular to the first direction from a lower surface of the image sensor and a 1-2 circuit board connected to the 1-1 circuit board and disposed to extend in the first direction, and the plurality of first pads may be disposed on the 1-2 circuit board.

The camera device may further include a second camera actuator disposed between the image sensor and the first camera actuator, in which the 1-1 circuit board, the image sensor, the second camera actuator, and the first camera actuator may be sequentially disposed in the first direction, and the 1-2 circuit board may be disposed on a side surface of the second camera actuator.

The first camera actuator may be an OIS actuator, and the second camera actuator may be a zoom actuator or an auto-focus (AF) actuator.

### [Advantageous Effects]

A technical problem to be solved by embodiments of the present invention is to implement a camera actuator and a camera module having improved assemblability and enhanced reliability through a connector portion even with a long stroke.

Embodiments according to the present invention can implement a camera actuator and a camera module in which assembly tolerance is eliminated and the inflow of foreign matter is suppressed by controlling a structure of a circuit board.

Embodiments according to the present invention can implement a camera actuator and a camera module with improved reliability by suppressing the inflow of foreign matter through a plate.

Additionally, according to embodiments of the present invention, a camera actuator and a camera device in which efficient connection between a main board and a circuit board for an actuator in a camera device including the actuator is possible can be obtained.

According to embodiments of the present invention, a camera actuator applicable to an ultra-slim, ultra-small and high-resolution camera can be obtained.

Various useful advantages and effects of the present invention are not limited to the above-described contents, and can be more easily understood in a process of describing specific embodiments of the present invention.

### [Description of Drawings]

FIG. 1 is a perspective view of a camera module according to an embodiment.
FIG. 2 is an exploded perspective view of the camera module according to the embodiment.
FIG. 3 is a cross-sectional view along line AA' in FIG. 1.
FIG. 4 is a perspective view of a second camera actuator according to the embodiment.
FIG. 5 is a cross-sectional view along line DD' in FIG. 4.
FIG. 6 is a perspective view showing a circuit board according to the embodiment.
FIG. 7 is a front view showing the circuit board according to the embodiment.
FIG. 8 is a plan view showing the circuit board according to the embodiment.
FIG. 9 is a perspective view of a cover according to the embodiment.
FIG. 10 is a bottom view of the cover according to the embodiment.
FIG. 11 is a plan view of the cover and the circuit board according to the embodiment.
FIG. 12 is a perspective view of the cover and the circuit board according to the embodiment.
FIG. 13 is a perspective view of the camera module according to the embodiment.
FIG. 14 is a plan view of the camera module according to the embodiment.
FIG. 15 is a perspective view of a first board portion, a second board portion, and the circuit board in the camera module according to the embodiment.
FIG. 16 is a side view of the camera module according to the embodiment.
FIG. 17 is a cross-sectional view along line II' in FIG. 16.
FIG. 18 is an enlarged view of portion K in FIG. 17.
FIG. 19 is a perspective view of a camera device according to an embodiment.
FIG. 20 is an exploded perspective view of the camera device according to the embodiment.
FIG. 21 is a view along line AA' in FIG. 19.
FIG. 22 is a perspective view of a first camera actuator according to an embodiment.
FIG. 23 is an exploded perspective view of the first camera actuator according to the embodiment.
FIG. 24 is a perspective view of the second camera actuator according to the embodiment.
FIG. 25 is a perspective view of the camera device according to the embodiment, excluding the cover.
FIG. 26 is an exploded perspective view of the camera device according to the embodiment, excluding the cover.
FIG. 27 is a perspective view of the circuit board of the camera device according to the embodiment.
FIG. 28 is a front view of a connection structure of circuit boards after soldering according to the embodiment.
FIG. 29 is a perspective view of the connection structure of circuit boards after soldering according to the embodiment.
FIG. 30 is a cross-sectional view of the connection structure of circuit boards according to the embodiment after soldering.
FIG. 31 is a front view of a connection structure of circuit boards according to the embodiment before soldering.
FIG. 32 is a perspective view of the connection structure of circuit boards according to the embodiment before soldering.
FIG. 33 is a cross-sectional view of the connection structure of circuit boards according to the embodiment before soldering.
FIG. 34 is an exploded view for describing a connection structure of circuit boards according to the embodiment.
FIG. 35 is an enlarged perspective view of a part of the connection structure of circuit boards.
FIG. 36 is a perspective view of a mobile terminal to which the camera module according to the embodiment is applied.
FIG. 37 is a perspective view of a vehicle to which the camera module according to the embodiment is applied.

### [Modes of the Invention]

Since the embodiments according to the present invention may have various modifications and embodiments, specific embodiments are exemplified in the drawings and described. Here, this is not intended to limit the present invention to specific embodiments, and it should be understood to include all modifications, equivalents, or substitutes included in the spirit and technical scope of the present invention.

Although terms that include ordinal numbers such as second and first may be used for describing various constituent elements, the constituent elements are not limited by these terms. These terms are used only for distinguishing one constituent element from another. For example, without departing from the scope of the present invention, a second constituent element could be named a first constituent element, and similarly, the first constituent element could also be named the second constituent element. The term and/or includes any combination of a plurality of related described items or any item among the plurality of related described items.

When it is said that a constituent element is "connected" or "coupled" to another constituent element, although it should be understood that it may be directly connected or coupled to that other constituent element, another constituent element may also be present therebetween. On the other hand, when it is said that any constituent element is "directly connected" or "directly coupled" to another constituent element, it should be understood that another constituent element is not present therebetween.

The terminology used in this application is used only for describing specific embodiments and is not intended to limit the present invention. Singular expressions include plural expressions unless the context clearly indicates otherwise. In this application, it should be understood that terms such as terms "include" or "have" are intended to specify the presence of a feature, a number, a step, an operation, a constituent element, a part or a combination thereof described in the specification, but do not exclude in advance the possibility of the presence or the addition of one or more of other features, numbers, steps, operations, constituent elements, parts or combinations thereof.

Unless otherwise defined, all terms used herein, including technical or scientific terms, have the same meaning as commonly understood by one of ordinary skill in the art to which this invention belongs. Terms defined in commonly used dictionaries should be interpreted as having a meaning consistent with their meaning in the context of the relevant art, and will not be interpreted in an idealized or overly formal sense, unless expressly defined otherwise in this application.

Hereinafter, embodiments will be described in detail with reference to the attached drawings. Regardless of the drawing number, the same or corresponding constituent elements are denoted by the same reference numerals and redundant descriptions thereof will be omitted.

Additionally, in this specification, a camera actuator is described as a device that moves a lens, but includes both concepts in which the device includes or does not include a lens. In the following description, first and second camera actuators are described to include a concept in which each of the first and second camera actuators includes a lens. Additionally, a camera actuator that moves a lens may also be referred to as a 'lens transfer device' or a 'lens driving device.'

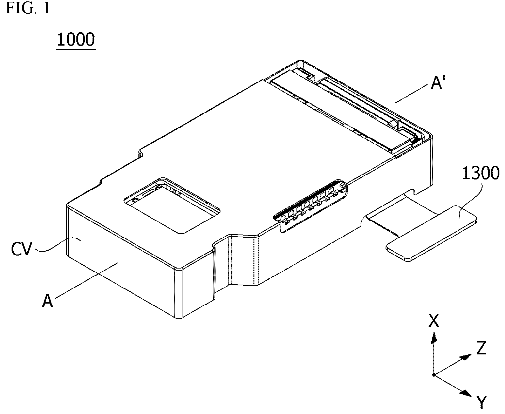

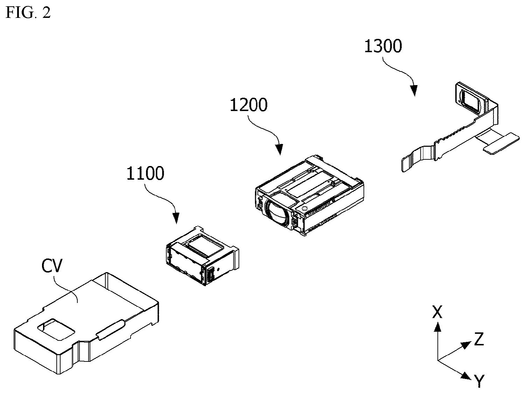

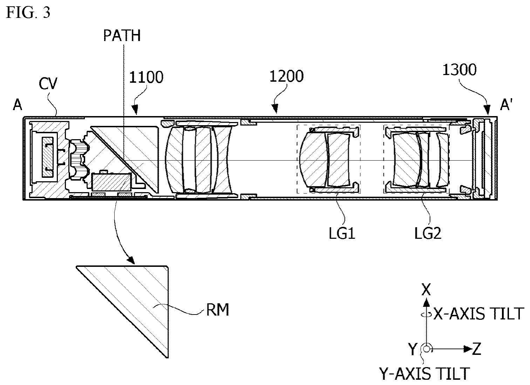

FIG. 1 is a perspective view of a camera module according to an embodiment, FIG. 2 is an exploded perspective view of the camera module according to the embodiment, and FIG. 3 is a cross-sectional view along line AA' in FIG. 1.

Referring to FIGS. 1 and 2, a camera module 1000 according to an embodiment may be composed of a cover CV, a first camera actuator 1100, a second camera actuator 1200, and a circuit board 1300. Here, the first camera actuator 1100 may be used interchangeably with a first actuator and the second camera actuator 1200 may be used interchangeably with a second actuator.

The cover CV may cover the first camera actuator 1100 and the second camera actuator 1200. A coupling force between the first camera actuator 1100 and the second camera actuator 1200 may be improved by the cover CV.

Furthermore, the cover CV may be made of a material that performs electromagnetic shielding. Thus, the first camera actuator 1100 and the second camera actuator 1200 in the cover CV may be easily protected.

Further, the first camera actuator 1100 may be an optical image stabilization (OIS) actuator. For example, the first camera actuator 1100 may move an optical member in a direction perpendicular to an optical axis (an axis of incident light).

The first camera actuator 1100 may include a fixed focal length lens disposed in a predetermined barrel (not shown). The fixed focal length lens may also be referred to as a "single focal length lens" or a "prime lens."

The first camera actuator 1100 may change an optical path. In an embodiment, the first camera actuator 1100 may vertically change the optical path through an internal optical member (for example, a prism or a mirror). For example, the optical member may change a direction of light from a first direction (X-axis direction) to a third direction (Z-axis direction). With this configuration, a configuration of lenses having sizes greater than a thickness of a mobile terminal may be disposed in the mobile terminal to perform magnification, auto-focus (AF), zoom, and OIS functions, even though the thickness of the mobile terminal is reduced, by changing the optical path.

However, the present invention is not limited thereto and the first camera actuator 1100 may change the optical path vertically or at a predetermined angle multiple times.

The second camera actuator 1200 may be disposed at a rear end of the first camera actuator 1100. The second camera actuator 1200 may be coupled to the first camera actuator 1100. Further, the second camera actuator 1200 and the first camera actuator 1100 may be coupled in various ways.

Furthermore, the second camera actuator 1200 may be a zoom actuator or an AF actuator. For example, the second camera actuator 1200 may support one or a plurality of lenses and move the lenses in response to a control signal from a predetermined control unit to perform an auto-focus function or a zoom function.

Further, one or the plurality of lenses may move independently or individually in an optical axis direction.

The circuit board 1300 may be disposed at a rear end of the second camera actuator 1200. The circuit board 1300 may be electrically connected to the second camera actuator 1200 and the first camera actuator 1100. Moreover, a plurality of circuit boards 1300 may be provided.

The camera module according to the embodiment may be composed of one or a plurality of camera modules. For example, the plurality of camera modules may include a first camera module and a second camera module.

Further, one camera module may include one or a plurality of actuators. For example, one camera module may include the first camera actuator 1100 and the second camera actuator 1200. Furthermore, the camera module may be used interchangeably with various terms such as a camera device and an imaging device.

Further, the camera module may be disposed in a predetermined housing (not shown) and include an actuator (not shown) capable of driving a lens unit. The actuator may be a voice coil motor, a micro actuator, a silicon actuator, or the like and applied in various ways such as capacitive, thermal, bimorph, and electrostatic methods, but is not limited thereto. In addition, in this specification, the camera actuator may be referred to as an actuator or the like. In addition, a camera module composed of a plurality of camera modules may be installed in various electronic devices, such as mobile terminals. Furthermore, the actuator may be a device for moving or tilting a lens and an optical member. Here, in the following description, the actuator is described as a concept in which the actuator includes a lens or an optical member. Furthermore, the actuator may be referred to as a 'lens transfer device,' a 'lens movement device,' an 'optical member transfer device,' an 'optical member movement device,' or the like.

Referring to FIG. 3, the camera module according to the embodiment may include the first camera actuator 1100 that performs an OIS function and the second camera actuator 1200 that performs zoom and AF functions.

Light may be incident into the camera module or the first camera actuator through an opening region located in an upper surface of the first camera actuator 1100. That is, light may be incident into the first camera actuator 1100 in the optical axis direction (for example, X-axis direction, based on incident light), and the optical path may be changed vertically through the optical member. Further, light may pass through the second camera actuator 1200 and may be incident on an image sensor IS located at one end of the second camera actuator 1200 (PATH). In this specification, the Z-axis direction or the third direction is described as the optical axis direction as follows. Additionally, in this specification, the optical axis direction may correspond to the third direction, a vertical direction may correspond to the first direction, and a horizontal direction may correspond to a second direction.

In this specification, a bottom surface means one side in the first direction. Further, the first direction is the X-axis direction in the drawing and may be used interchangeably with a second-axis direction or the like. The second direction is the Y-axis direction in the drawing and may be used interchangeably with a first-axis direction or the like. The second direction is a direction perpendicular to the first direction. Also, the third direction is the Z-axis direction in the drawing and may be used interchangeably with a third-axis direction or the like. Further, the third direction is a direction perpendicular to both the first and second directions. Here, the third direction (Z-axis direction) corresponds to a direction of the optical axis, and the first direction (X-axis direction) and the second direction (Y-axis direction) are directions perpendicular to the optical axis. Additionally, in the following description, in the description of the first camera actuator and the second camera actuator, the optical axis direction is the third direction (Z-axis direction), and the following description is made based on this.

Furthermore, in this specification, an inner side may be a side in a direction from the cover CV toward the first camera actuator, and an outer side may be a side in a direction opposite to that of the inner side. For example, the first camera actuator and the second camera actuator may be located inside the cover CV, and the cover CV may be located outside the first camera actuator or the second camera actuator.

The camera module according to the embodiment may improve the spatial limitations of the first camera actuator and the second camera actuator by changing the optical path. The camera module according to the embodiment may expand the optical path while minimizing the thickness of the camera module in response to a change in the optical path. Furthermore, it should be understood that the second camera actuator can also provide a high range of magnification by controlling a focus or the like in the expanded optical path.

Furthermore, the camera module according to the embodiment can implement OIS through control of the optical path via the first camera actuator, thereby minimizing the occurrence of decentering or tilt phenomena and producing the best optical characteristics.

Furthermore, the second camera actuator 1200 may include an optical system and a lens driving unit. For example, at least one of a first lens assembly, a second lens assembly, and a third lens assembly may be disposed in the second camera actuator 1200.

Also, the second camera actuator 1200 may include a coil and a magnet to perform a high magnification zoom function and an auto-focus function.

For example, although the first lens assembly and the second lens assembly may be moving lenses that move via coils, magnets, and guide pins, and the third lens assembly may be a fixed lens, the present invention is not limited thereto. For example, the third lens assembly may function as a focator that forms a light image on a specific position and have a significant change in magnification due to a significant change in a distance to a subject or an image distance depending on the movement of the first lens assembly. Further, the first lens assembly, which is a variator, may play an important role in the focal length or magnification change of the optical system. Meanwhile, an image point that is formed in the first lens assembly, which is a variator, may vary slightly depending on the position thereof. Thus, the second lens assembly may perform a position compensation function for the image formed using the variator. For example, the second lens assembly may function as a compensator, which functions to accurately forms the image point formed in the first lens assembly, which is a variator, on an actual position of the image sensor.

Further, the first lens assembly and the second lens assembly may be driven using an electromagnetic force due to the interaction of the coils and the magnets. The above description can be applied to the lens assembly which will be described below. Furthermore, the first lens assembly or the second lens assembly may move in the optical axis direction, that is, the third direction. Further, the first lens assembly or the second lens assembly may move in the third direction independently or dependently.

Furthermore, the third lens assembly may be located at a front end of the first lens assembly or at a rear end of the second lens assembly. That is, the third lens assembly may be positioned adjacent to the first camera actuator or adjacent to the image sensor. Further, the third lens assembly may be fixed.

In the embodiment of the present invention, the first lens assembly and the second lens assembly may move in the optical axis direction. Further, the third lens assembly may be located at a front end of the first lens assembly or at a rear end of the second lens assembly. Further, the third lens assembly may not move in the optical axis direction. That is, the third lens assembly may be a fixed unit. Furthermore, the first and second lens assemblies may be moving units.

Meanwhile, when an actuator for OIS and an actuator for AF/zoom are disposed in accordance with the embodiment of the present invention, magnetic interference with a magnet for AF/zoom may be prevented when driving the OIS. Since a magnet of the first camera actuator 1100 is disposed separately from the second camera actuator 1200, magnetic interference between the first camera actuator 1100 and the second camera actuator 1200 may be prevented. In this specification, OIS may be interchangeably referred to as the terms such as image stabilization, optical image stabilization, optical image correction, and shake correction.

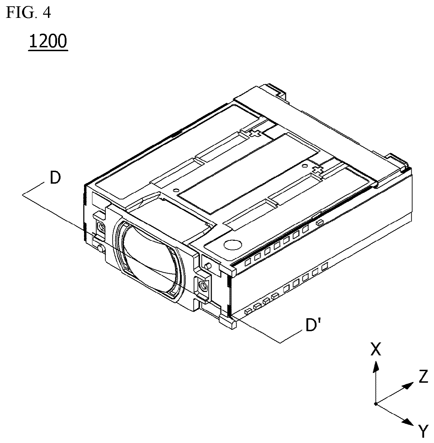

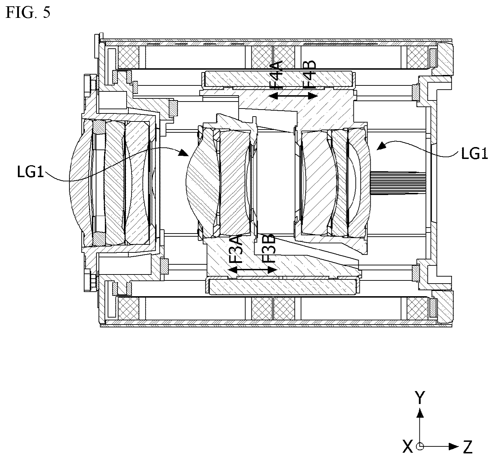

FIG. 4 is a perspective view of the second camera actuator according to the embodiment, and FIG. 5 is a cross-sectional view along line DD' in FIG. 4.

Referring to FIGS. 4 and 5, the second camera actuator 1200 according to the embodiment may include one or a plurality of lenses LG1 and LG2 (or a plurality of moving assemblies and fixed assemblies including lenses) as described above.

The second camera actuator may include a driving unit and move at least one of the plurality of lenses in the optical axis or in the third direction (Z-axis direction) by the driving unit. Depending on driving forces F3A, F3B, F4A, and F4B by the driving unit, the lenses LG1 and LG2 may move individually or together. In an embodiment, the lenses (or moving assemblies) may each move in the optical axis direction.

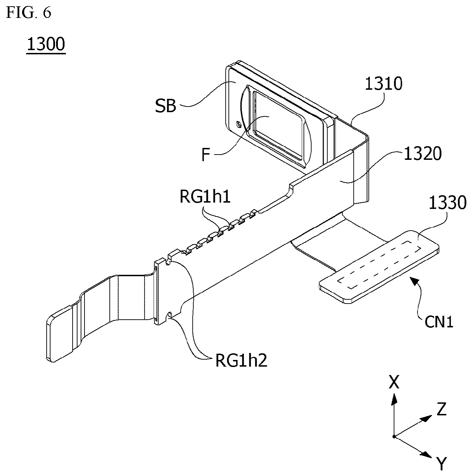

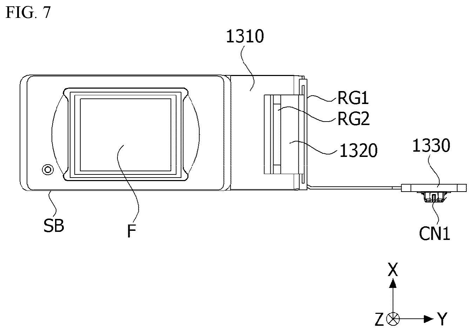

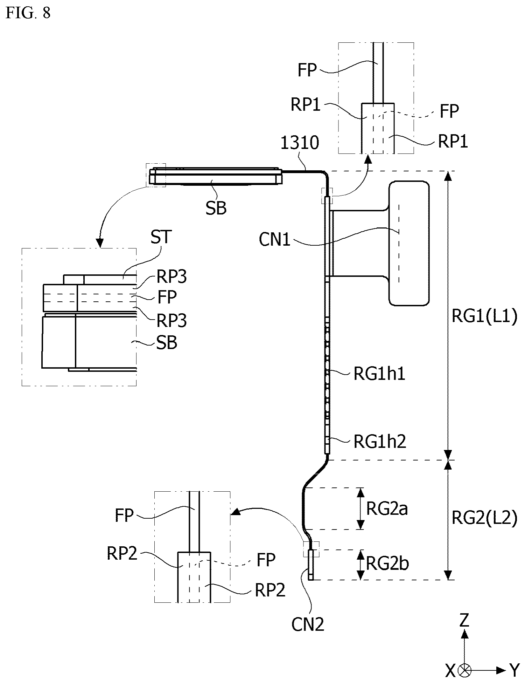

FIG. 6 is a perspective view showing a circuit board according to the embodiment, FIG. 7 is a front view showing the circuit board according to the embodiment, and FIG. 8 is a plan view showing the circuit board according to the embodiment.

Referring to FIG. 6, the circuit board 1300 according to the embodiment may include a first circuit board portion 1310, a second circuit board portion 1320, and a third circuit board portion 1330.

The first circuit board portion 1310 may be located at a rear end of the second camera actuator. Furthermore, the image sensor IS may be disposed on the first circuit board portion 1310. Further, the first circuit board portion 1310 and the image sensor IS may be electrically connected.

Furthermore, the first circuit board portion 1310 may be coupled to a sensor base (or base) SB. Furthermore, a filter F may be seated in the sensor base SB. The filter F may be coupled to the first circuit board portion 1310.

In this way, the image sensor and the circuit board (first circuit board portion) may be located at the rear end of the second camera actuator.

The first camera actuator, the second camera actuator, and the circuit board 1300 may be sequentially disposed in the optical axis direction. Furthermore, the first circuit board portion 1310 of the circuit board 1300 may be located at the rear end of the second camera actuator and may overlap the second camera actuator in the optical axis direction.

Additionally, the second circuit board portion 1320 may be located on a side portion of the camera module. Particularly, the second circuit board portion 1320 may be connected to the first circuit board portion 1310. Further, the second circuit board portion 1320 may extend in the optical axis direction from the first circuit board portion 1310.

Thus, the second circuit board portion 1320 may be positioned adjacent to a second board portion of the second camera actuator positioned adjacent to a first side portion. Accordingly, the second circuit board portion 1320 may be easily electrically connected to the second camera actuator.

Additionally, in various embodiments, the second circuit board portion 1320 may be located on both or any one of side portions of the first and second camera actuators. Accordingly, at least one second circuit board portion 1320 may be provided. In the following description, the description will be made based on the second circuit board portion 1320 disposed on only one side portion.

The third circuit board portion 1330 may be connected to the second circuit board portion 1320 or the first circuit board portion 1310. Further, the third circuit board portion 1330 may extend in a direction perpendicular to the optical axis direction (for example, the second direction). For example, the third circuit board portion 1330 may extend outward from the second circuit board portion 1320. Accordingly, the third circuit board portion 1330 may extend in a direction different from that of the second circuit board portion 1320.

In addition, the circuit board 1300 may additionally include a fixed board (not shown) located on a side surface thereof. Thus, even when the circuit board 1300 is made of a flexible material, the circuit board 1300 may be coupled to the base while maintaining rigidity due to the fixed board.

Additionally, the second circuit board portion 1320 of the circuit board 1300 may be located on a side portion of the driving unit of the second camera actuator. The circuit board 1300 may be electrically connected to a driving unit of the first camera actuator and the driving unit of the second camera actuator. For example, electrical connection may be made using SMT or a connector. This will be described below.

Additionally, the circuit board 1300 may include a circuit board having electrically connectable wiring patterns, such as a rigid printed circuit board (rigid PCB), a flexible printed circuit board (flexible PCB), and a rigid flexible printed circuit board (rigid flexible PCB). However, the present invention is not limited to these types.

In an embodiment, the circuit board 1300 according to the embodiment may include a common board and an individual board. The circuit board 1300 may include a common board and an individual board disposed in accordance with positions thereof on the common board.

For example, the first circuit board portion 1310 may include a common board FP and a third individual board RP3 disposed in a region of the common board.

The third individual board RP3 may be located on at least one of both sides of the common board FP. With this configuration, rigidity can be reinforced and electrical connection can be facilitated. For example, the third individual boards RP3 may be located on opposing sides in the optical axis direction of the common board FP.

Furthermore, the first circuit board portion 1310 may further include a reinforcement plate ST located on one of the third individual boards RP3. Accordingly, the sensor base SB, the third individual board RP3, the common board FP, the third individual board RP3, and the reinforcement plate ST may be disposed sequentially in the optical axis direction. Thus, the reliability of the circuit board 1300 may be improved, and heat dissipation may also be easily performed.

In addition, the second circuit board portion 1320 may include a common board, and a first individual board RP1 and a second individual board RP2 disposed in some regions of the common board.

Additionally, the second circuit board portion 1320 may include a first region RG1 located at the outermost side and a second region RG2 located inside the first region RG1.

Specifically, the second circuit board portion 1320 may include the common board FP, the first individual board RP1 disposed in the first region RG1, and the second individual board RP2 disposed in the second region RG2.

The first individual board RP1 and the second individual board RP2 may be disposed spaced apart from each other in the optical axis direction. Furthermore, the first individual board RP1 and the second individual board RP2 may be positioned offset from each other in the optical axis direction.

Further, the first individual board RP1 and the second individual board RP2 may be located on at least one of an inner side and an outer side with respect to the common board FP. With this configuration, rigidity can be reinforced and electrical connection can be facilitated.

Further, the first camera actuator and the second camera actuator may have different lengths or widths in the second direction (Y-axis direction). In response to this, the second circuit board portion 1320 may have a structure that extends in the optical axis direction and is bent inward or outward.

In an embodiment, the second region RG2 may include a 2-1 region RG2a and a 2-2 region RG2b. The second region RG2 may include a 2-1 region RG2a and a 2-2 region RG2b.

The 2-1 region RG2a may be located inside the 2-2 region RG2b. For example, the 2-1 region RG2a may be positioned closer to the first camera actuator than the 2-2 region RG2b. Furthermore, the 2-2 region RG2b may be disposed between the 2-1 region RG2a and the first region RG1 in the horizontal direction.

Furthermore, the circuit board 1300 may include a first connector CN1 and a second connector CN2. The first connector CN1 may be located on the third circuit board portion 1330. As described above, the third circuit board portion 1330 may have a structure that extends in a direction different from that of the second circuit board portion 1320. Accordingly, the circuit board 1300 may be easily electrically connected to another camera module in a terminal or a processor of the terminal via the first connector CN1. That is, ease of assembly may be secured, and the reliability of the first connector CN1 may be improved. In addition, the above-described camera actuator and the camera device including the same may transmit and receive various signals in the terminal.

Further, the second connector CN2 may be located on the second circuit board portion 1320. Furthermore, the second connector CN2 may be located in the second region RG2 on the second circuit board portion 1320. Further, the second circuit board portion 1320 may be electrically connected to a first board portion of the first camera actuator via the second connector CN2. The first board portion of the first camera actuator and the second circuit board portion 1320 may be, for example, pin-coupled by the second connector CN2. With this configuration, control of the first camera actuator can be achieved through the circuit board 1300. In addition, process defects such as non-soldering, cold soldering, and cracks due to side surface soldering can be reduced. Thus, the reliability of the camera actuator can be improved. In addition, the application of a protective member (for example, epoxy) for soldering protection can be eliminated. Accordingly, it is possible to provide the effects of simplifying the process and reducing manufacturing costs.

In an embodiment, a length L1 of the first region RG1 in the optical axis direction may be greater than a length L2 of the second region RG2. Further, a length of the first individual board RP1 in the optical axis direction may be smaller than the length L1 of the first region RG1. Furthermore, a length of the second individual board RP2 may be smaller than the length L2 of the second region RG2. Here, the length L1 of the first region RG1 corresponds to a length of the common board FP in the first region RG1. Further, the length L2 of the second region RG2 corresponds to a length of the common board FP in the second region RG2.

In the circuit board 1300 according to the embodiment of the present invention, the length of the first individual board RP1 in the optical axis direction may be 0.5 times or more the length L1 of the common board FP in the first region RG1. That is, the length of the first individual board in the optical axis direction RP1 in the first region RG1 may be somewhat large. In contrast, the length of the second individual board RP2 in the optical axis direction may be 0.5 times or less the length L2 of the common board FP in the second region RG2.

Thus, since the second circuit board portion 1320 includes the second connector CN2, a size of the second individual board RP2 may be reduced due to the second connector so that structural deformation of the second circuit board portion 1320 is easily achieved.

Furthermore, the second circuit board portion 1320 may include a terminal groove RG1h1 and a coupling groove RG1h2 in the first region RG1. The terminal groove RG1h1 may correspond to a first terminal portion described below.

At least one terminal groove RG1h1 may be provided. Electrical connection between the second camera actuator and a main board may be achieved by the terminal groove RG1h1. Alternatively, control for testing driving of the second camera actuator may be achieved by the terminal groove RG1h1. Furthermore, soldering connection by the terminal groove RG1h1 may be easily achieved. The detailed description of this will be made below.

Further, the coupling groove RG1h2 may be a hole or groove. Through the coupling groove RG1h2, the second circuit board portion 1320 and the second camera actuator may be coupled to each other. Additionally, alignment between the second circuit board portion 1320 and the second camera actuator may be achieved by the coupling groove RG1h2.

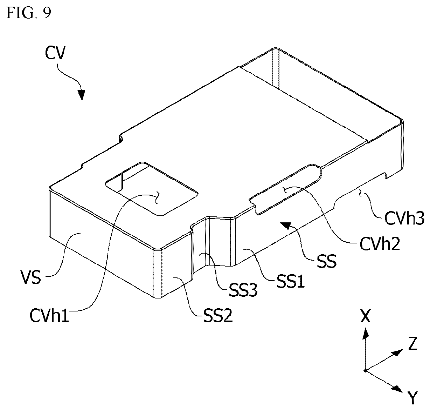

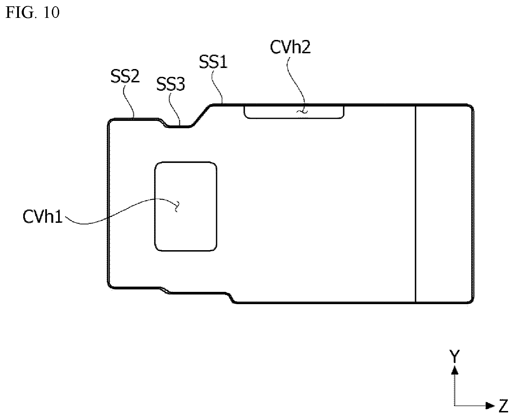

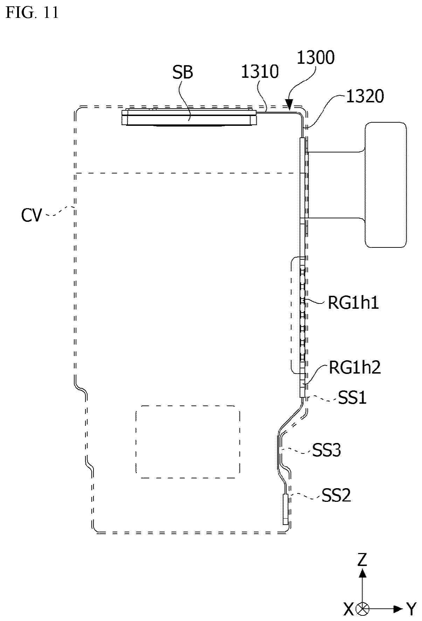

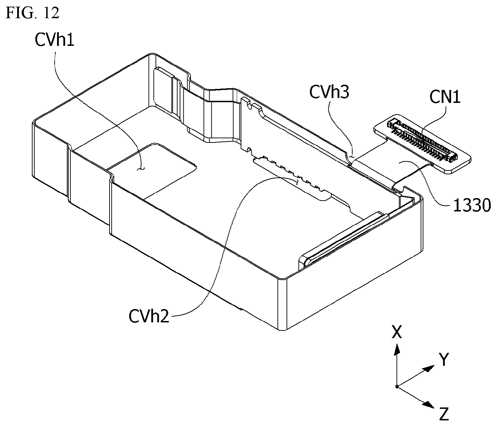

FIG. 9 is a perspective view of the cover according to the embodiment, FIG. 10 is a bottom view of the cover according to the embodiment, FIG. 11 is a plan view of the cover and the circuit board according to the embodiment, and FIG. 12 is a perspective view of the cover and the circuit board according to the embodiment.

Referring to FIGS. 9 to 12, the cover CV according to the embodiment may surround the first camera actuator, the second camera actuator, and the circuit board. However, the circuit board may be partially located outside the cover CV. For example, the third circuit board portion of the circuit board may be disposed outside the cover CV.

The cover CV may have a shape corresponding to the shapes of the first camera actuator, the second camera actuator, and the circuit board to surround the first camera actuator, the second camera actuator, and the circuit board.

Accordingly, the cover CV may include a first cover hole CVh1 disposed in an upper surface US. Through the first cover hole CVh1, light may be provided to an optical member of the first camera actuator, and the first camera actuator may change an optical path.

Additionally, the cover CV may include a second cover hole CVh2 and a third cover hole CVh3 disposed in a side surface SS.

The second cover hole CVh2 may be positioned adjacent to the second circuit board portion. The first terminal portion (or terminal groove) and a second terminal portion may be exposed through the second cover hole CVh2. Accordingly, testing and the like may be easily performed even after assembling the cover CV.

Furthermore, the third cover hole CVh3 may be positioned adjacent to the second circuit board portion. The third circuit board may extend outward from the second circuit board portion through the third cover hole CVh3.

The cover CV may surround the first and second circuit board portions 1310 and 1320. For example, the first circuit board portion 1310 may overlap the cover CV in the optical axis direction or the second direction. Further, the cover CV may overlap the second circuit board portion 1320 in the optical axis direction or the second direction.

Further, the third circuit board portion 1330 may extend outward through the third cover hole CVh3 and may be disposed spaced apart from the cover CV in the second direction.

Furthermore, the side surface SS adjacent to the second circuit board portion in the cover CV may include a first side surface region SS1, a second side surface region SS2, and a third side surface region SS3.

The first side surface region SS1 may face a first region. That is, the first side surface region SS1 may overlap the first region of the second circuit board portion in the second direction.

The second side surface region SS2 may face a 2-2 region of a second region. That is, the second side surface region SS2 may overlap the 2-2 region of the second region in the second direction.

The third side surface region SS3 may face a 2-1 region of the second region. That is, the third side surface region SS3 may overlap the 2-1 region of the second region in the second direction.

In this way, the side surface SS of the cover CV may have a shape corresponding to the shape of the second circuit board portion. That is, the cover CV may be positioned so that regions (second and third side surface regions) in which the cover CV overlaps the first camera actuator in the second direction are positioned further inward from a region (first side surface region) in which the cover CV overlaps the second camera actuator in the second direction. With this configuration, the components (for example, circuit board) in the cover CV can be easily protected.

Furthermore, due to the shape of the second circuit board portion, the cover CV may have an asymmetrical structure with respect to the optical axis. In a modified example, the cover CV may have opposing sides corresponding to the side surface SS for rigidity and ease of production. That is, the cover CV may have a structure that is symmetrical with respect to the optical axis.

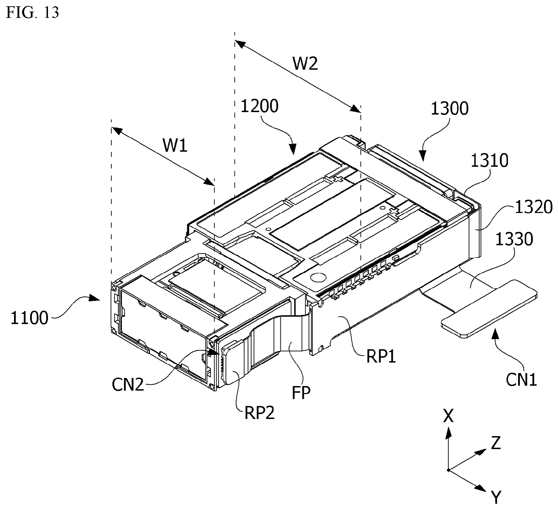

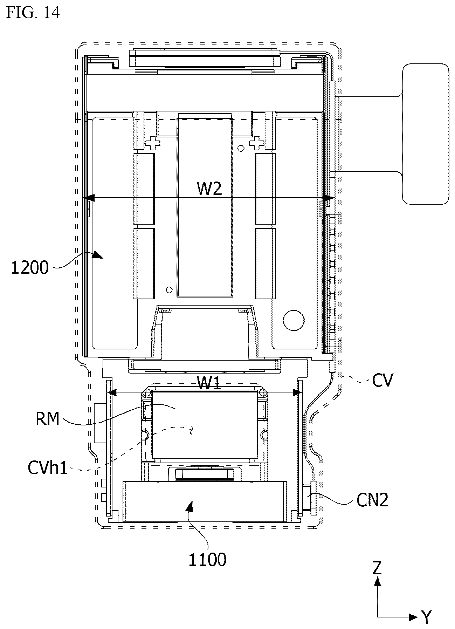

FIG. 13 is a perspective view of the camera module according to the embodiment, and FIG. 14 is a plan view of the camera module according to the embodiment.

Referring to FIGS. 13 and 14, in the camera module according to the embodiment, a width W1 of the first camera actuator 1100 may be smaller than a width W2 of the second camera actuator 1200. In response to this, as described above, the second circuit board portion 1320 may have a first region and a second region in an inward folded or bent structure.

For example, a ratio of the width W1 of the first camera actuator 1100 to the width W2 of the second camera actuator 1200 may be 1:1.1 to 1:1.5. Preferably, the ratio of the width W1 of the first camera actuator 1100 to the width W2 of the second camera actuator 1200may be 1:1.2 to 1:1.3. With this configuration, it is possible to provide a camera module that is somewhat compact and provides a long stroke.

Furthermore, a length of the first camera actuator in the optical axis direction may be smaller than a length of the second camera actuator in the optical axis direction.

The second circuit board portion 1320 may overlap the first camera actuator 1100 and the second camera actuator 1200 in the second direction. Furthermore, the second camera actuator may overlap the first region of the second circuit board portion 1320 in the second direction. Further, the first camera actuator 1100 may overlap the second region of the second circuit board portion 1320 in the second direction. The second circuit board portion 1320 may be electrically connected to the first camera actuator via the second connector CN2 disposed in the second region.

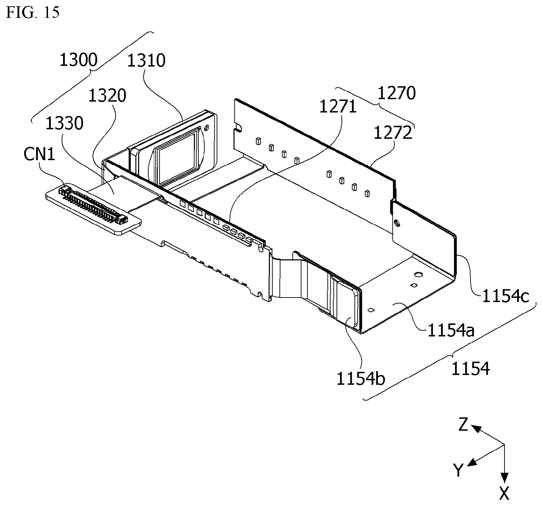

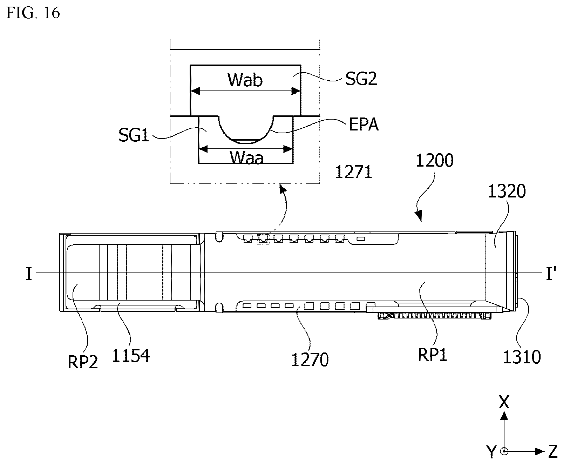

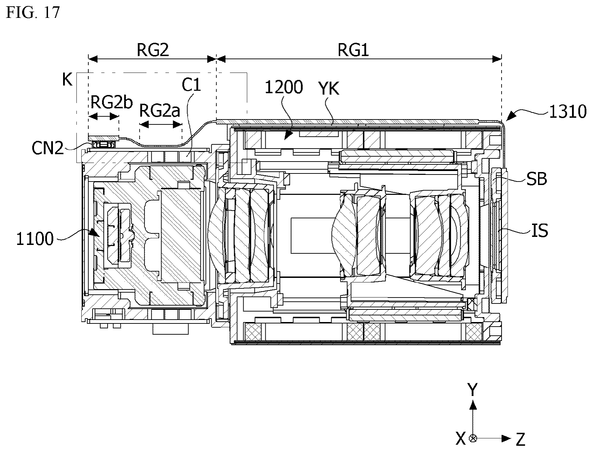

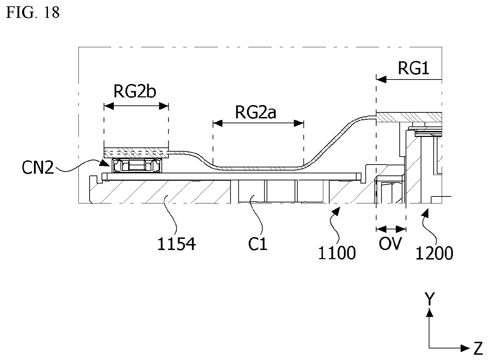

FIG. 15 is a perspective view of a first board portion, a second board portion, and the circuit board in the camera module according to the embodiment, FIG. 16 is a side view of the camera module according to the embodiment., FIG. 17 is a view along line II' in FIG. 16, and FIG. 18 is an enlarged view of portion K in FIG. 17.

Referring to FIGS. 15 to 18, the circuit board 1300 according to the embodiment may at least partially surround a side surface of the second camera actuator described above. For example, the circuit board 1300 may overlap at least partially the side surface of the second camera actuator or a side surface of the first camera actuator in the horizontal direction (Y-axis direction, second direction).

Further, a second board portion 1270 according to the embodiment may be disposed on the side surface of the second camera actuator. For example, the second board portion 1270 may come into contact with a side surface of a main barrel in the second camera actuator.

Further, a first board portion 1154 according to the embodiment may be disposed on the side surface of the first camera actuator. For example, the first board portion 1154 may come into contact with a side surface of a housing of the first camera actuator.

Further, the second circuit board portion 1320 according to the embodiment may extend in the optical axis direction to surround the first camera actuator. For example, as described above, the second circuit board portion 1320 may extend to at least partially overlap the first camera actuator in the horizontal direction or the second direction (Y-axis direction).

Additionally, the second circuit board portion 1320 may be connected to an end portion of the first circuit board portion 1310 and may extend in the optical axis direction or the third direction (Z-axis direction). That is, the second circuit board portion 1320 may be bent from the circuit board 1300 and may extend in the third direction.

The first circuit board portion 1310 and the second circuit board portion 1320 may be integrally formed or separate structures. In an embodiment, the first circuit board portion 1310 and the second circuit board portion 1320 (and the third circuit board portion) may be integrally formed. Furthermore, the first circuit board portion 1310 and the second circuit board portion 1320 may include an integral common board (FP in FIG. 8). Further, as described above, each of the first circuit board portion 1310 and the second circuit board portion 1320 may include an individual board.

In an embodiment, the first circuit board portion 1310 and the second circuit board portion 1320 may be composed of a plurality of layers. Furthermore, the first circuit board portion 1310 and the second circuit board portion 1320 may include holes or a plurality of layers for circuit patterns therein. That is, the first circuit board portion 1310 may have a structure in which an individual board, a common board, and an individual board are laminated. Further, the second circuit board portion 1320 may also have a structure in which an individual board, a common board, and an individual board are laminated. In this case, the individual boards and the common board may have circuit patterns therein and may be composed of one or a plurality of layers.

For example, a plurality of layers of rigid printed circuit boards and soft or flexible printed circuit boards may be disposed in the first circuit board portion 1310 and the second circuit board portion 1320. In a modified example, the first circuit board portion 1310 may have a structure in which a flexible printed circuit board, a rigid printed circuit board, and a flexible printed circuit board are sequentially laminated. Additionally, a reinforcing material or reinforcing plate may be additionally disposed in a region where a flexible printed circuit board is disposed in the first circuit board portion 1310 and the second circuit board portion 1320.

Additionally, in the camera module according to the embodiment, the first circuit board portion and the second circuit board portion may include a common board which is a flexible printed circuit board. Further, in the first circuit board portion and the second circuit board portion, a rigid printed circuit board may be arranged inside and/or outside the flexible printed circuit board.

Further, the second board portion 1270 of the second camera actuator 1200 may include a first board 1271 and a second board 1272. At least one of the first board 1271 and the second board 1272 may face the second circuit board portion 1320 and overlap the second circuit board portion 1320 in the horizontal direction.

In the second camera actuator 1200, the first board 1271 and the second board 1272 may be spaced apart from the first circuit board portion 1310 in the optical axis direction. Accordingly, a size of the sensor base or the like disposed on the first circuit board portion 1310 may be secured. Furthermore, the size of the sensor base may be increased so that elements installed on the first circuit board portion 1310 are not exposed to the outside. That is, the reliability of circuit elements may be improved. In addition, since the sizes of the first board 1271 and the second board 1272 are reduced, the camera module may be effectively miniaturized and lightweight.

The first board 1271 and the second board 1272 may be disposed symmetrically with respect to each other based on the optical axis or the optical axis direction. Furthermore, each of the first board 1271 and the second board 1272 may be electrically connected to the driving unit (for example, coil) of the second camera actuator.

The first board portion 1154 of the first camera actuator may include a first sub-board 1154a disposed on a bottom surface of the first camera actuator, and a second sub-board 1154b and a third sub-board 1154c disposed on each side surface of the first camera actuator.

The first sub-board 1154a may be disposed below the first camera actuator as described above and may at least partially overlap the first camera actuator in the first direction (X-axis direction).

The second sub-board 1154b and the third sub-board 1154c may surround the side surface of the first camera actuator. Further, the second sub-board 1154b and the third sub-board 1154c may at least partially come into contact with the side surface of the first camera actuator.

The second sub-board 1154b and the third sub-board 1154c may be disposed symmetrically with respect to the optical axis or the optical axis direction. The second sub-board 1154b may be disposed adjacent to the side portion of the first housing described above. Further, the third sub-board 1154c may be disposed adjacent to the side portion of the second housing as described above.

Additionally, the second sub-board 1154b may be disposed adjacent to the first board 1271. For example, the second sub-board 1154b may at least partially overlap the first board 1271 in the optical axis direction. Alternatively, the second sub-board 1154b may be located outside the first board 1271 with respect to the optical axis.

Further, the third sub-board 1154c may be disposed adjacent to the second board 1272. For example, the third sub-board 1154c may at least partially overlap the second board 1272 in the optical axis direction. Alternatively, the third sub-board 1154c may be located outside the second board 1272 with respect to the optical axis.

Furthermore, the second sub-board 1154b may at least partially come into contact with the second circuit board portion 1320. Additionally, the second sub-board 1154b may be surrounded by the second circuit board portion 1320.

Additionally, the second camera actuator may include the first board 1271 having a second terminal portion SG2. The second terminal portion SG2 may be soldered to a first terminal portion SG1 of the second circuit board portion 1320 described below. For this purpose, the second circuit board portion 1320 and the first board 1271 may overlap each other in a direction perpendicular to the optical axis (for example, the second direction). At least a part of the first terminal portion SG1 of the second circuit board portion 1320 may correspond to at least some of a plurality of pads (second terminal portion) of the first board 1271. Further, any one of the first board 1271 and the second board 1272 may include the second terminal portion SG2. The entire second terminal portion SG2 may be disposed on each or any one of the first board 1271 and the second board 1272.

Furthermore, as disclosed in this specification, at least one of the first board and/or the second board and the second board portion may be soldered and connected. That is, the second circuit board portion (including a plurality of terminals or a first terminal portion) and a board of the second camera actuator (including a plurality of pads or a second terminal portion) may be soldered and connected. In an embodiment, the first board 1271 of the second camera actuator may include the second terminal portion SG2. For this purpose, the first terminal portion SG1 may be positioned to correspond to the second terminal portion SG2.

Additionally, at least a part of the first terminal portion SG1 may be soldered to at least a part of the second terminal portion SG2. Further, the first terminal portion and the second terminal portion may be electrically connected.

An outer surface of the first terminal portion SG1 may be convex inward or concave outward. With this configuration, the first terminal portion SG1 may be easily filled with a conductive member (for example, solder).

For example, the second circuit board portion 1320 may be located on the first board 1271. Based on this, the second terminal portion SG2 may be located below the first terminal portion SG1. The first terminal portion SG1 may overlap the second terminal portion SG2 in the second direction (Y-axis direction).

A length of the first terminal portion SG1 in the first direction (X-axis direction) may be smaller than a length of the second terminal portion SG2 in the first direction (X-axis direction). With this configuration, when a conductive member is applied to the first terminal portion SG1 and the second terminal portion SG2, the conductive member may not flow into the first board. Furthermore, the first terminal portion SG1 and the second terminal portion SG2 may be easily coupled to each other by the conductive member.

Additionally, a length Waa of the first terminal portion SG1 in the third direction or the optical axis direction may be smaller than a length Wab of the second terminal portion SG2 in the optical axis direction. Accordingly, the soldered conductive member may not flow into the first board.

An area of the first terminal portion SG1 may be smaller than an area of the second terminal portion SG2. Thus, electrical connection may be achieved more accurately. In addition, rigidity may be easily secured by soldering. Furthermore, even when there is a shift of the first board 1271 during active alignment for the first and second lens assemblies or active alignment for the sensor base SB, a soldering region may be easily secured. Further, the first board 1271 may include an exposure region EPA that overlaps a hole of the first terminal portion SG1 in the horizontal direction. The exposure region EPA may be a region separated from the second terminal portion SG2. As a result, the conductive material may flow to the first terminal portion SG1 and may be seated in the second terminal portion SG2. In a modified example, the electrical connection between the second circuit board portion and the second board portion 1270 of the second camera actuator 1200 may be achieved through pin coupling.

Additionally, the first camera actuator 1100 may include a first driving unit disposed on the first board portion 1154. For example, the first driving unit may include a coil C1. In this case, the first driving unit may not overlap the second connector CN2 in the horizontal direction. That is, the first driving unit may be disposed spaced apart from the second connector CN2. Alternatively, the first driving unit may be offset from the second connector CN2 in a direction perpendicular to the optical axis direction. With this configuration, a space for electrical connection or patterns between the coil C1 and a Hall sensor or the like and the first board portion 1154 may be easily secured. In addition, the influence of magnetic fields from other elements such as coils may also be reduced. Additionally, the heat generated from the coil C1 may not be directly provided to the second connector CN2.

Furthermore, the first region RG1 of the second circuit board portion 1320 may overlap the second camera actuator 1200 in the direction perpendicular to the optical axis direction (second direction). Additionally, the first region RG1 may partially overlap the first camera actuator 1100 in the direction perpendicular to the optical axis direction (second direction) (OV). With this configuration, reliability of the first individual board of the first region RG1 can be secured. Furthermore, the tolerance for the boundary between the second camera actuator and the first camera actuator can be secured. That is, ease of assembly can be improved.

Furthermore, the common board FP of the second circuit board portion 1320 may be easily bent inward or toward the first camera actuator.

Additionally, the 2-1 region RG2a may be in contact with the first board portion 1154 of the first camera actuator 1100. Particularly, the 2-1 region RG2a may be disposed adjacent to the first driving unit or the coil C1. For example, the 2-1 region RG2a may overlap the first driving unit or the coil C1 in the second direction. With this configuration, absorption of heat generated in the first driving unit can occur. Alternatively, when the 2-1 region RG2a presses the first board portion 1154, the structural reliability of the camera module may be improved.

Furthermore, the 2-2 region RG2b may overlap the second connector CN2 in the horizontal direction. The 2-2 region RG2b may be disposed spaced apart from the first board portion 1154 in the horizontal direction to secure a space for the second connector CN2. In addition, since the above-described 2-1 region RG2a is positioned further inward than the 2-2 region RG2b, a space between the second circuit board portion 1320 and the first camera actuator 1100 in the second direction may be reduced. Accordingly, the inflow of foreign matter into the second connector CN2 located in the 2-2 region RG2b may be prevented. Furthermore, the application of a protective member (for example, epoxy) surrounding the second connector CN2 located in the 2-2 region RG2b may be easily achieved. In addition, the common board FP extending from the 2-1 region RG2a in a region between the first region RG1 and the first board portion 1154 may be easily bent, or the connection or assembly between the second connector CN2 and the first board portion 1154 may be easily achieved. In other words, the second circuit board portion 1320 does not protrude outside the first region RG1, and positional alignment for improved assembly may be easily performed.

In addition, the 2-1 region RG2a may be disposed between the 2-2 region RG2b and the first region RG1 in the optical axis direction. That is, the 2-2 region RG2b may be disposed further away from the first region RG1 than the 2-1 region RG2a. With this configuration, a larger connection tolerance for the second connector CN2 disposed in the 2-2 region RG2b can be secured. In other words, as the 2-2 region RG2b is spaced farther away from the 2-1 region RG2a and the first region RG1, the tolerance problem occurring in regions other than the 2-2 region RG2b can be resolved.

Additionally, a yoke YK may be further disposed between the first region RG1 and the second board portion of the second camera actuator 1200. That is, the camera actuator 1200 may include the yoke YK disposed outside the second board portion. A holding force for a position of a moving assembly in the second camera actuator 1200 may be generated by the yoke YK. Furthermore, magnetic forces applied from the outside may also be blocked.

The yoke YK may overlap the first region RG1 in the horizontal direction. Further, the first region RG1 may not partially overlap the yoke YK in the horizontal direction. Accordingly, the occurrence of cracks in the second circuit board portion due to the yoke YK may be reduced.

A camera module according to an embodiment of the present invention includes a first actuator, a second actuator, and an image sensor sequentially disposed in an optical axis direction, and a circuit board disposed near the first actuator and the second actuator, the circuit board includes a first circuit board portion in which the image sensor is seated and a second circuit board portion connected to the first circuit board portion and extending in the optical axis direction, and the second circuit board portion overlaps the first actuator and the second actuator in a direction perpendicular to the optical axis direction and is connected to the first actuator.

A length of the first actuator in the direction perpendicular to the optical axis direction may be smaller than a length of the second actuator in the direction perpendicular to the optical axis direction.

The second circuit board portion may include a first region located at the outermost side and a second region located inside the first region.

The second circuit board portion may include a common board, a first individual board disposed in the first region, and a second individual board disposed in the second region.

A length of the first individual board in the optical axis direction may be 0.5 times or more a length of the common board in the optical axis direction in the first region.

A length of the second individual board in the optical axis direction may be 0.5 times or less a length of the common board in the optical axis direction in the second region.

The circuit board may include a third circuit board portion extending in the direction perpendicular to the optical axis direction from the second circuit board portion and including a first connector, and the second circuit board portion may include a second connector overlapping and connected to the first actuator in the direction perpendicular to the optical axis direction.

The first actuator may include a first board portion disposed on a side surface, and the second actuator may include a second board portion disposed on a side surface.

The first board portion may be pin-coupled and may be electrically connected to the second connector.

The first actuator may include a first driving unit disposed on the first board portion, the first driving unit may be disposed spaced apart from the second connector, and the first driving unit may be disposed offset from the second connector in the direction perpendicular to the optical axis direction.

The second connector may be disposed at an end of the second circuit board portion in the optical axis direction.

The second circuit board portion may include a terminal groove and a coupling groove disposed in the first region, and the first region may partially overlap the first actuator in the direction perpendicular to the optical axis direction.

The second region may include a 2-1 region located at the innermost side and a 2-2 region disposed between the first region and the 2-1 region in the direction perpendicular to the optical axis direction.

The 2-1 region may be in contact with the first actuator.

The camera module may include a cover surrounding the first actuator, the second actuator, and the circuit board, the cover may be asymmetrical with respect to the optical axis, and the cover may include a first cover hole disposed in an upper surface and a second cover hole adjacent to the second circuit board portion.

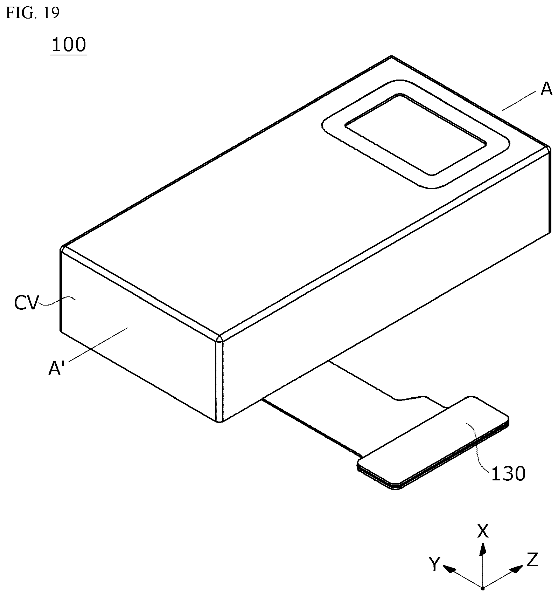

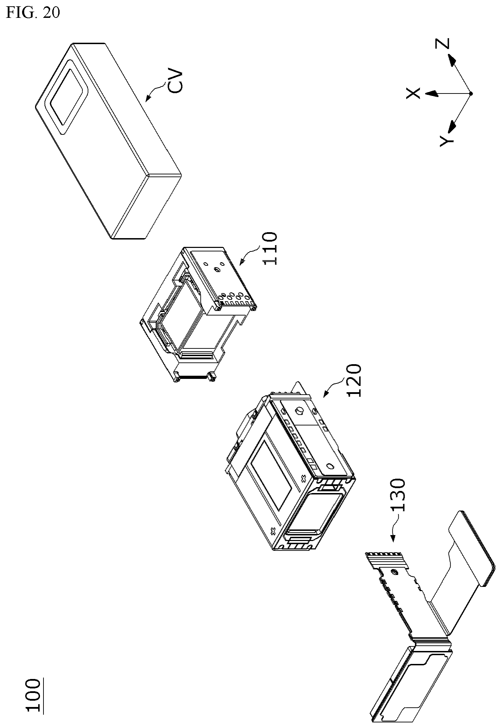

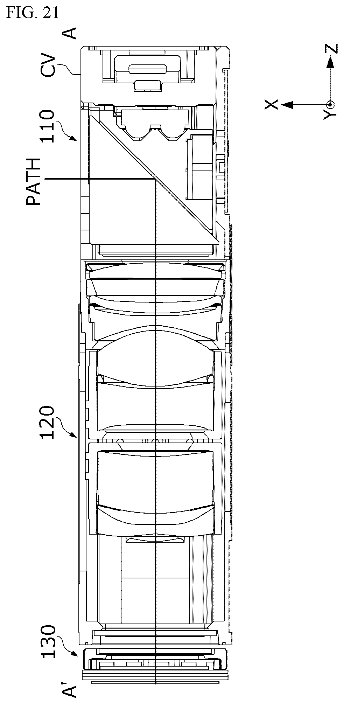

FIG. 19 is a perspective view of a camera device according to an embodiment, FIG. 20 is an exploded perspective view of the camera device according to the embodiment, and FIG. 21 is a view along line AA' in FIG. 19.

The drawings shown below correspond to the drawings viewed by cutting along the corresponding cross-section.

Referring to FIGS. 19 and 20, a camera device 100 according to the embodiment includes a cover CV, a first camera actuator 110, a second camera actuator 120, and a main board portion 130. In this specification, the first camera actuator 110 may be used interchangeably with a first actuator, and the second camera actuator 120 may be used interchangeably with a second actuator.

The cover CV may cover the first camera actuator 110 and the second camera actuator 120. A coupling force between the first camera actuator 110 and the second camera actuator 120 may be improved by the cover CV.

Furthermore, the cover CV may be made of a material that performs electromagnetic shielding. Thus, the first camera actuator 110 and the second camera actuator 120 in the cover CV may be easily protected.

The first camera actuator 110 may be an optical image stabilization (OIS) actuator. For example, the first camera actuator 110 may move an optical member in a direction perpendicular to the optical axis (an axis of incident light).

The first camera actuator 110 may include a fixed focal length lens disposed in a predetermined barrel (not shown). The fixed focal length lens may also be referred to as a "single focal length lens" or a "prime lens."

The first camera actuator 110 may change an optical path. In an embodiment, the first camera actuator 110 may vertically change the optical path through an internal optical member (for example, a prism or a mirror). For example, the optical member may change a direction of light from the X-axis direction to the Z-axis direction. Alternatively, the optical member may change an axis of light from a first axis to a second axis. With this configuration, a configuration of lenses having sizes greater than a thickness of a mobile terminal may be disposed in the mobile terminal to perform magnification, auto-focus (AF), zoom, and OIS functions, even though the thickness of the mobile terminal is reduced, by changing the optical path.

However, the present invention is not limited thereto and the first camera actuator 110 may change the optical path vertically or at a predetermined angle multiple times.

The second camera actuator 120 may be disposed at a rear end of the first camera actuator 110. The second camera actuator 120 may be coupled to the first camera actuator 110. Further, the second camera actuator 120 and the first camera actuator 110 may be coupled in various ways.

Furthermore, the second camera actuator 120 may be a zoom actuator or an AF actuator. For example, the second camera actuator 120 may support one or a plurality of lenses and move the lenses in response to a control signal from a predetermined control unit to perform an auto-focus function or a zoom function.

Further, one or the plurality of lenses may move independently or individually in the optical axis direction.

The main board portion 130 may be disposed at a rear end of the second camera actuator 120. The main board portion 130 may be electrically connected to the second camera actuator 120 and the first camera actuator 110. Additionally, a plurality of main board portions 130 may be provided.

In this specification, the first camera actuator 110 and the second camera actuator 120 may be a voice coil motor, a micro actuator, a silicon actuator, or the like and may be applied in various ways such as capacitive, thermal, bimorph, electrostatic methods, but is not limited thereto. The first camera actuator 110 and the second camera actuator 120 may be devices for moving or tilting a lens or an optical member, and in this specification, the first camera actuator 110 and the second camera actuator 120 are described as concepts in which each of the first camera actuator 110 and the second camera actuator 120 includes a lens or an optical member. Furthermore, each of the first camera actuator 110 and the second camera actuator 120 may be referred to as a 'lens transfer device,' a 'lens movement device,' an 'optical member transfer device,' an 'optical member movement device," or the like.

Referring to FIG. 21, the camera device according to the embodiment may include the first camera actuator 110 that performs an OIS function and the second camera actuator 120 that performs zoom and AF functions.

Light may be incident into the camera device or the first camera actuator 110 through an opening region located in an upper surface of the first camera actuator 110. That is, light may be incident into the first camera actuator 110 in the X-axis direction, and the optical path may be changed (for example, changed from the X-axis direction to the Z-axis direction) through the optical member. Further, light may pass through the second camera actuator 120 and may be incident on an image sensor IS located at one end of the second camera actuator 120 (PATH). In this specification, the Z-axis direction is described as the optical axis direction, the X-axis direction and the Y-axis direction are perpendicular to each other, and each of the X-axis direction and the Y-axis direction is described as a direction perpendicular to the Z-axis direction.

Furthermore, in this specification, an inner side may be a side in a direction from the cover CV toward the first camera actuator, and an outer side may be a side in a direction opposite to that of the inner side. That is, the first camera actuator 110 and the second camera actuator 120 may be located inside the cover CV, and the cover CV may be located outside the first camera actuator 110 or the second camera actuator 120.

Further, with this configuration, the camera device 100 according to the embodiment can improve the spatial limitations of the first camera actuator 110 and the second camera actuator 120 by changing the optical path. That is, the camera device 100 according to the embodiment can expand the optical path while minimizing the thickness of the camera device 100 in response to a change in the optical path. Furthermore, it should be understood that the second camera actuator 120 can also provide a high range of magnification by controlling a focus or the like in the expanded optical path.

Furthermore, the camera device 100 according to the embodiment can implement OIS through control of the optical path via the first camera actuator 110, thereby minimizing the occurrence of decentering or tilt phenomena and producing the best optical characteristics.

Furthermore, the second camera actuator 120 may include an optical system and a lens driving unit. For example, the second camera actuator 120 may include at least one of a first lens assembly, a second lens assembly, and a third lens assembly sequentially disposed in a direction from the first camera actuator 110 toward the image sensor.

Also, the second camera actuator 120 may include a coil and a magnet to perform a high magnification zoom function and an auto-focus function.

For example, although the first lens assembly and the second lens assembly may be moving lenses that move in the optical axis direction via coils, magnets, and guide pins, and the third lens assembly may be a fixed lens, the present invention is not limited thereto. For example, the third lens assembly may function as a focator that forms a light image on a specific location, and the first lens assembly may function as a variator that reforms the image formed in the third lens assembly, which is a focator, on a different location. On the other hand, the first lens assembly may have a significant change in magnification due to a significant change in a distance to the subject or an image distance, and the first lens assembly, which is a variator, may play an important role in the focal length or magnification change of the optical system. Meanwhile, an image point that is formed in the first lens assembly, which is a variator, may vary slightly depending on the location thereof. Thus, the second lens assembly may perform a location compensation function for the image formed using the variator. For example, the second lens assembly may function as a compensator, which functions to accurately form the image point formed in the first lens assembly, which is a variator, on an actual position of the image sensor. For example, the first lens assembly and the second lens assembly may be driven using an electromagnetic force due to the interaction of the coil and the magnet. The first lens assembly and the second lens assembly may move independently or dependently. Here, although a case in which the second camera actuator 120 includes the first to third lens assemblies, the first and second lens assemblies are moving groups, and the third lens assembly is a fixed group is described as an example, the present invention is not limited thereto. The second camera actuator 120 may include a plurality of lens assemblies, and at least some of the plurality of lens assemblies may be moving groups.

Meanwhile, when an actuator for OIS and an actuator for AF/zoom are disposed in accordance with the embodiment of the present invention, magnetic interference with a magnet for AF/zoom may be prevented when driving the OIS. Since a first driving magnet of the first camera actuator 110 is disposed separately from the second camera actuator 120, magnetic interference between the first camera actuator 110 and the second camera actuator 120 may be prevented. In this specification, OIS may be interchangeably referred to as the terms such as image stabilization, optical image stabilization, optical image correction, and shake correction.

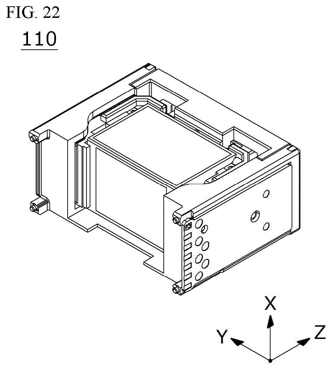

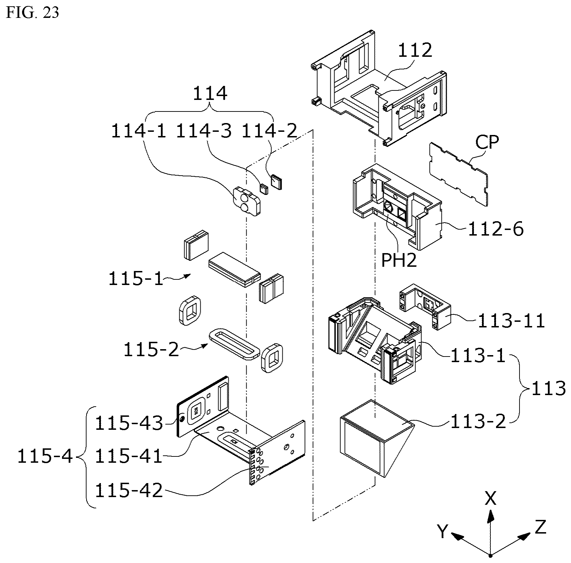

FIG. 22 is a perspective view of a first camera actuator according to an embodiment, and FIG. 23 is an exploded perspective view of the first camera actuator according to the embodiment.

Referring to FIGS. 22 and 23, a first camera actuator 110 according to the embodiment may include a first housing 112, a mover 113, a rotating portion 114, a first driving unit 115, a first member 112-6, and a second member 113-11. Furthermore, the first camera actuator 110 may further include a plate CP.

The mover 113 may include a holder 113-1 and an optical member 113-2 that is seated in the holder 113-1. Further, the rotating portion 114 may include a tilting guide portion 114-1, and a second magnetic body 114-2 and a first magnetic body 114-3 having the same or different polarities to press the tilting guide portion 114-1. For example, the first magnetic body 114-3 and the second magnetic body 114-2 may have the same polarity on sides thereof facing each other. Furthermore, the first driving unit 115 includes a driving magnet 115-1, a driving coil 115-2, a Hall sensor unit, a first board portion 115-4, and a yoke unit.

First, the first camera actuator 110 may include a shield can (not shown). The shield can (not shown) may be located at the outermost side of the first camera actuator 110 and may be located to surround the rotating portion 114 and the first driving unit 115 described below.

The shield can (not shown) may block or reduce electromagnetic waves generated from the outside. That is, the shield can (not shown) may reduce the occurrence of malfunctions in the rotating portion 114 or the first driving unit 115. The shield can (not shown) may be the cover member CV described above or may be a separate member disposed in the cover member CV.

The first housing 112 may be located inside the shield can (not shown). In the absence of the shield can, the first housing 112 may be located at the outermost side of the first camera actuator 110.

Furthermore, the first housing 112 may be located inside the first board portion 115-4 described below. The first housing 112 may be fitted into or aligned with the shield can (not shown) and may be fastened.

The first housing 112 may include a first housing side portion, a second housing side portion, a third housing side portion, and a housing wall portion.

The first member 112-6 may be disposed in the first housing 112. The first member 112-6 may have some regions through which a second member 113-11 passes. The first member 112-6 may have a structure that is integrated with or separate from the first housing 112.

Furthermore, the first camera actuator 110 may further include the plate CP disposed outside the first member 112-6. The plate CP may prevent foreign matter from entering the second member 113-11 or the like passing through the first member 112-6. Furthermore, the plate CP may be made of a magnetic material. Accordingly, the plate CP has magnetism, and thus a magnetic force may not be generated on the first magnetic body 114-3 and the second magnetic body 114-2 that have polarities for pressing. That is, the generation of the magnetic force that interferes with the driving (pressing) of the first magnetic body 114-3 and the second magnetic body 114-2 may be reduced.

When the plate CP is a magnetic body, the plate CP may be referred to as a magnetic member, a magnetic body, a cover plate, a metal member, a metal plate, or the like.

The mover 113 may include the holder 113-1 and the optical member 113-2 that is seated in the holder 113-1.

The holder 113-1 may be seated in an accommodating portion of the first housing 112. The holder 113-1 may include a first holder outer side surface to a fourth holder outer side surface corresponding to the first housing side portion, the second housing side portion, the third housing side portion, and the first member 112-6, respectively. For example, the first holder outer surface to the fourth holder outer surface may correspond to or face inner surfaces of the first housing side portion, the second housing side portion, the third housing side portion, and the first member 112-6, respectively.

Further, the holder 113-1 may include the second member 113-11 disposed in a fourth seating groove. The second member 113-11 may pass through the first member 112-6 and may be coupled to the holder 113-1. The second member 113-11 and the holder 113-1 may be coupled to each other by various connecting members or coupling members.

The optical member 113-2 may be seated in the holder 113-1. For this purpose, the holder 113-1 may have a seating surface, and the seating surface may be formed by an accommodating groove.

The optical member 113-2 may improve the spatial limitations of the first camera actuator 110 and the second camera actuator 120 by changing a path of reflected light. Thus, it should be understood that the camera device can provide a high range of magnification by expanding an optical path while minimizing the thickness thereof.

Additionally, the second member 113-11 may be coupled to the holder 113-1. The second member 113-11 may be disposed outside the holder 113-1 and inside the housing. Further, the second member 113-11 may be seated in an additional groove located in a region other than the fourth seating groove in the fourth holder outer side surface in the holder 113-1. Through this, the second member 113-11 may be coupled to the holder 113-1, and at least a part of the first member 112-6 may be located between the second member 113-11 and the holder 113-1. For example, at least a part of the first member 112-6 may be disposed in a space formed between the second member 113-11 and the holder 113-1. The second member 113-11 may pass through the hole formed in the first member 112-6.

Additionally, the second member 113-11 may be formed to have a separate structure from the holder 113-1. With this configuration, the assembly of the first camera actuator 110 can be easily performed as described below. Alternatively, the second member 113-11 may be integrally formed with the holder 113-1.

The rotating portion 114 includes the tilting guide portion 114-1, and the second magnetic body 114-2 and the first magnetic body 114-3 having the same polarity to press the tilting guide portion 114-1.

The tilting guide portion 114-1 may be coupled to the mover 113 and the first housing 112 described above. Specifically, the tilting guide portion 114-1 may be disposed between the holder 113-1 and the first member 112-6. Accordingly, the tilting guide portion 114-1 may be coupled to the mover 113 of the holder 113-1 and the first housing 112. However, in this embodiment, the tilting guide portion 114-1 may be disposed between the first member 112-6 and the holder 113-1. Specifically, the tilting guide portion 114-1 may be located between the first member 112-6 and the fourth seating groove of the holder 113-1. For example, at least a part of the tilting guide portion 114-1 may be located in the fourth seating groove.

In the Z-axis direction, the second member 113-11, the first member 112-6, the tilting guide portion 114-1, and the holder 113-1 may be disposed in this order. Further, the second magnetic element 114-2 and the first magnetic element 114-3 may be seated in a first groove formed in the second member 113-11 and a second groove formed in the first member 112-6, respectively. The first groove may be located in the second member 113-11 and may move integrally with the holder and the second member 113-11, and the second groove may be located in the first member 112-6 to correspond to the first groove and may be coupled to the first housing 112.

Furthermore, the tilting guide portion 114-1 may be disposed adjacent to the optical axis. Thus, the actuator according to the embodiment may easily perform a change in the optical path in accordance with the first and second axis tilts.

The tilting guide portion 114-1 may include a first protrusion disposed spaced apart in the X-axis direction and a second protrusion disposed spaced apart in the Y-axis direction. Furthermore, the first protrusion and the second protrusion may protrude in directions opposite to each other.

Furthermore, the second magnetic body 114-2 may be located in the second member 113-11. Furthermore, the first magnetic body 114-3 may be located in the first member 112-6.

The second magnetic body 114-2 and the first magnetic body 114-3 may have the same polarity. For example, the second magnetic body 114-2 may be a magnet having an N pole, and the first magnetic body 114-3 may be a magnet having an N pole. Alternatively, the second magnetic body 114-2 may be a magnet having an S pole and the first magnetic body 114-3 may be a magnet having an S pole. For example, as described above, a first pole surface of the first magnetic body 114-3 and a second pole surface of the second magnetic body 114-2 facing the first polar surface may have the same polarity.

The second magnetic body 114-2 and the first magnetic body 114-3 may generate a repulsive force between each other due to the polarities described above. With this configuration, the above-described repulsive force can be applied to the second member 113-11 or the holder 113-1 coupled to the second magnetic body 114-2 and the first member 112-6 or the first housing 112 coupled to the first magnetic body 114-3. In this case, the repulsive force applied to the second member 113-11 may be transmitted to the holder 113-1 coupled to the second member 113-11. Thus, the tilting guide part 114-1 disposed between the second member 113-11 and the first member 112-6 may be pressed by the repulsive force. Furthermore, the above-described repulsive force may also be transmitted to the housing and the mover. Thus, the housing and the mover may be pressed against each other by the repulsive force. In other words, the repulsive force may correspond to a holding force that maintains the position between the housing and the mover. That is, the repulsive force may maintain the tilting guide portion 114-1 to be located between the holder 113-1 and the first housing 112 (or the first member 112-6). With this configuration, the position between the mover 113 and the first housing 112 can be maintained even when tilting with respect to the X-axis or the Y-axis. Additionally, the tilting guide portion may be brought into close contact with the first member 112-6 and the holder 113-1 by the repulsive force between the first magnetic body 114-3 and the second magnetic body 114-2. In other words, the repulsive force by the first magnetic body 114-3 and the second magnetic body 114-2 may be a holding force for the position between the holder 113-1 and the first housing 112.

The first driving unit 115 may include the driving magnet 115-1, the driving coil 115-2, the Hall sensor unit, the first board portion 115-4, and the yoke unit.

The driving magnet 115-1 may include a first magnet, a second magnet, and a third magnet that provide a driving force by an electromagnetic force. The first magnet, the second magnet, and the third magnet may each be located on an outer surface of the holder 113-1.

A plurality of driving coils 115-2 may be provided. In an embodiment, the driving coils 115-2 may include a first coil, a second coil, and a third coil.

The first coil may be positioned opposite to the first magnet. Accordingly, the first coil may be located in a first housing hole of the first housing side portion. Furthermore, the second coil may be positioned opposite to the second magnet. Accordingly, the second coil may be located in a second housing hole of the second housing side portion.

The first camera actuator 110 according to the embodiment may provide the best optical characteristics by minimizing the occurrence of decentering or tilt phenomena when implementing OIS by rotating and controlling the mover 113 in the X-axis direction or the Y-axis direction by the electromagnetic force between the driving magnet 115-1 and the driving coil 115-2.

In addition, according to the embodiment, when OIS is implemented through the tilting guide part 114-1 of the rotating portion 114 disposed between the first housing 112 and the mover 113, the size limitation of the actuator can be resolved, thereby providing an ultra-slim, ultra-small camera actuator and a camera device including the same.

The first board portion 115-4 may include a first sub-board 115-41, a second sub-board 115-42, and a third sub-board 115-43.

The second sub-board 115-42 and the third sub-board 115-43 may be disposed to face each other. Further, the first sub-board 115-41 may be located between the second sub-board 115-42 and the third sub-board 115-43.

Furthermore, the first sub-board 115-41 may be located between the first housing side portion and the shield can, and the second sub-board 115-42 may be located between the second housing side portion and the shield can. Additionally, the third sub-board 115-43 may be located between the third housing side portion and the shield can and may be a bottom surface of the first board portion 115-4.

The first sub-board 115-41 may be coupled and electrically connected to the first coil. Furthermore, the first sub-board 115-41 may be coupled and electrically connected to a first Hall sensor.

The second sub-board 115-42 may be coupled and electrically connected to the second coil. Additionally, it should be understood that the second sub-board 115-42 may be coupled and electrically connected to the first Hall sensor.

The third sub-board 115-43 may be coupled and electrically connected to the third coil. Additionally, the third sub-board 115-43 may be coupled and electrically connected to a second Hall sensor.

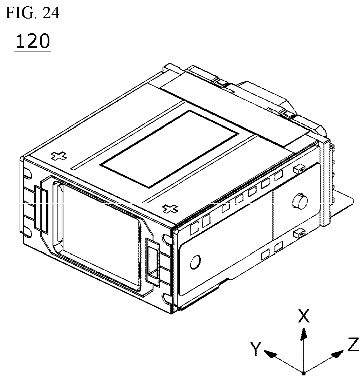

FIG. 24 is a perspective view of the second camera actuator according to the embodiment.

Referring to FIG. 24, the second camera actuator 120 according to the embodiment may include one or plurality of lens assemblies.

The second camera actuator 120 may include a driving unit and may move at least one of the plurality of lens assemblies in the Z-axis direction by the driving unit. Depending on a driving force by the driving unit, the lens assemblies may move individually or together. In an embodiment, lenses are each movable in the optical axis direction.

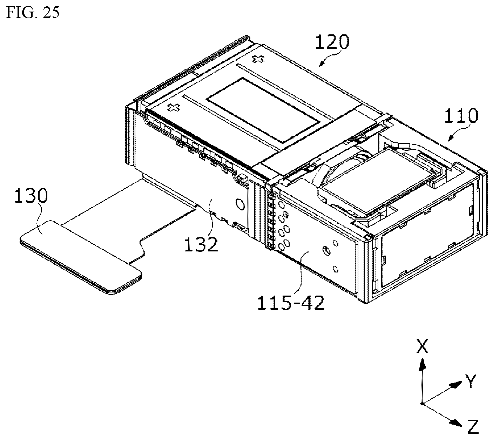

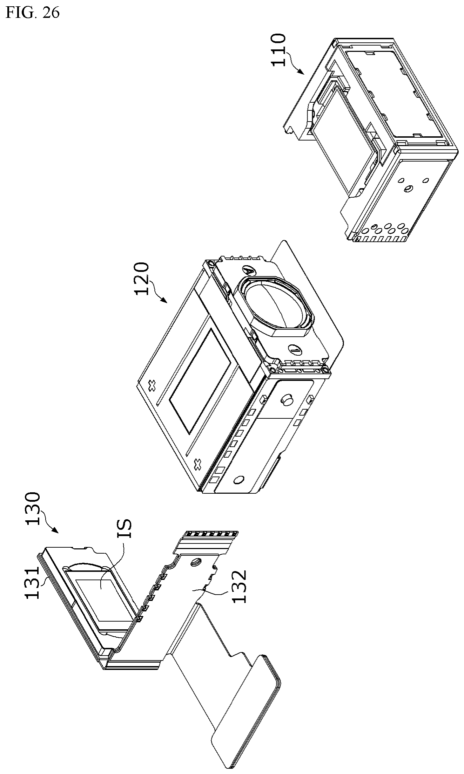

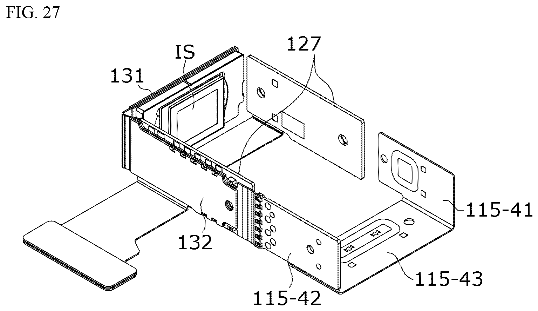

FIG. 25 is a perspective view of the camera device according to the embodiment, excluding the cover, FIG. 26 is an exploded perspective view of the camera device according to the embodiment, excluding the cover, and FIG. 27 is a perspective view of the circuit board of the camera device according to the embodiment.

Referring to FIGS. 25 to 27, in the camera device according to the embodiment, the first camera actuator 110, the second camera actuator 120, and the main board portion 130 may be sequentially disposed in one direction or in the optical axis direction (Z-axis direction). Thus, the second camera actuator 120 may be located at a rear end of the first camera actuator 110.

Further, the first camera actuator 110 and the second camera actuator 120 may have surfaces facing each other. For example, a first surface of the first camera actuator 110 and a second surface of the second camera actuator 120 may face each other. Here, the first surface may be a rear surface of the first camera actuator 110. Further, the second surface may be a front surface of the second camera actuator 120. A connecting member or the like may be applied to the first surface and the second surface. Alternatively, the first surface and the second surface may be coupled to each other via a protrusion/groove structure. Accordingly, the first camera actuator 110 and the second camera actuator 120 may be coupled to each other. That is, the first camera actuator 110 and the second camera actuator 120 may be coupled directly or indirectly in various ways.

According to the embodiment, the main board portion 130 may be disposed on at least a part of a side surface of the second camera actuator 120. For example, the main board portion 130 may overlap at least a part of the side surface of the second camera actuator 120 or a side surface of the first camera actuator 110 in the horizontal direction (Y-axis direction).

A circuit board 115-42 for the first camera actuator 110 may be disposed on the side surface of the first camera actuator 110. For example, the circuit board 115-42 may come into contact with the side surface of the first camera actuator 110.

A circuit board 127 for the second camera actuator 120 may be disposed on the side surface of the second camera actuator 120. For example, the circuit board 127 may come into contact with the side surface of the second camera actuator 120.

The main board portion 130 may include an image sensor installed therein. The main board portion 130 may include a first unit main board 131 that overlaps the second camera actuator (or the first camera actuator) in the optical axis direction (Z-axis direction) and a second unit main board 132 that is bent from the first unit main board 131 and extends to the side surface of the second camera actuator 120. Additionally, the main board portion 130 may extend to both side surfaces of the second camera actuator 120 and further include a third unit main board (not shown). The third unit main board (not shown) may be positioned to face the second unit main board 132 with respect to the optical axis.

First, an image sensor IS and a sensor base may be disposed on the first unit main board 131.

Further, at least one of the second unit main board 132 and the third unit main board (not shown) according to the embodiment may extend in the Z-axis direction to surround the second camera actuator 120. For example, the second unit main board 132 and the third unit main board (not shown) may overlap the second camera actuator 120 in the Y-axis direction. According to the embodiment, the second unit main board 132 and the third unit main board (not shown) may further extend in the Z-axis direction to overlap the first camera actuator 110 as well in the Y-axis direction.

Any one of the second unit main board 132 and the third unit main board (not shown) may be connected to a connector unit CN.

The first unit main board 131 and the second unit main board 132 may have an integrated structure or separate structures. In an embodiment, the first unit main board 131 and the second unit main board 132 may include an integral common flexible printed circuit board (FPCB) and include separate individual rigid printed circuit boards (RPCBs). Accordingly, a region between the first unit main board 131 and the second unit main board 132 may be easily folded by a region made only of the FPCB. Accordingly, the first unit main board 131 may be disposed in a direction perpendicular to the Z-axis direction, and the region between the first unit main board 131 and the second unit main board 132 may be folded by the FPCB so that the second unit main board 132 may be disposed in the Z-axis direction.

In an embodiment, the first unit main board 131 and the second unit main board 132 may be composed of a plurality of layers. Furthermore, the first unit main board 131 and the second unit main board 132 may include holes or a plurality of layers for circuit patterns therein. That is, the first unit main board 131 may have a structure in which an individual board, a common board, and an individual board are laminated. Further, the second unit main board 132 may also have a structure in which an individual board, a common board, and an individual board are laminated. In this case, the individual board and the common board may have circuit patterns therein and may include one or a plurality of layers.

The first board portion 115-4 included in the first camera actuator 110 may include the first sub-board 115-41 disposed on the bottom surface of the first camera actuator 110, and the second sub-board 115-42 and the third sub-board 115-43 disposed on side surfaces of the first camera actuator 110, respectively.

The first sub-board 115-41 may be disposed below the first camera actuator and may at least partially overlap the first camera actuator in the X-axis direction.

The second sub-board 115-42 and the third sub-board 115-43 may be disposed on the side surfaces of the first camera actuator 110. Further, the second sub-board 115-42 and the third sub-board 115-43 may at least partially come into contact with the side surfaces of the first camera actuator 110.

The second sub-board 115-42 and the third sub-board 115-43 may be disposed symmetrically with respect to the optical axis or the optical axis direction.

According to the embodiment of the present invention, the second unit main board 132 and the second sub-board 115-42 are connected by soldering. Hereinafter, a description will be made based on the second unit main board 132 referred to as the first circuit board 132, and the second sub-board 115-42 referred to as the second circuit board 115-42.

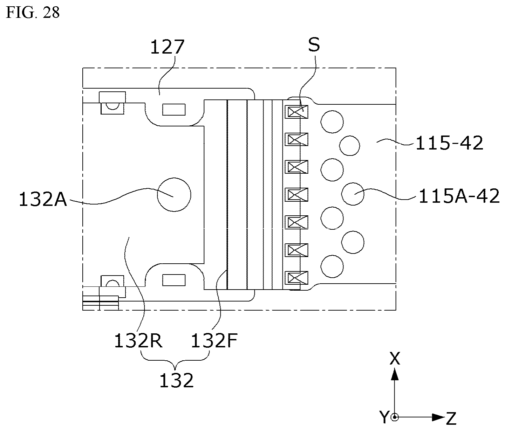

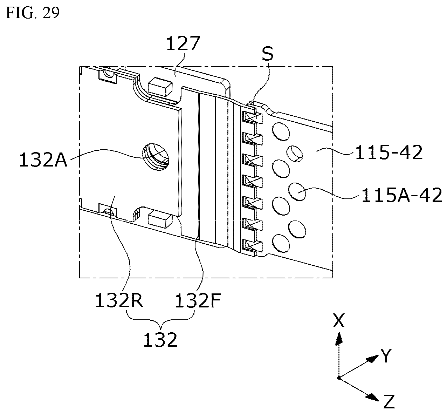

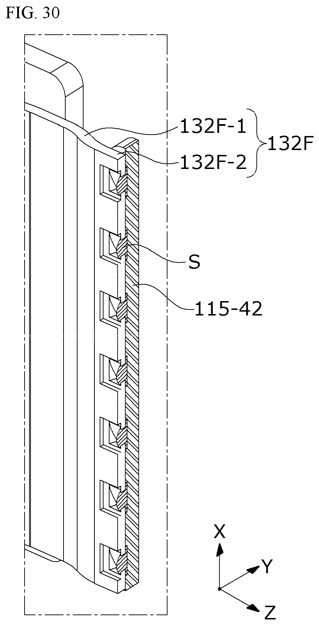

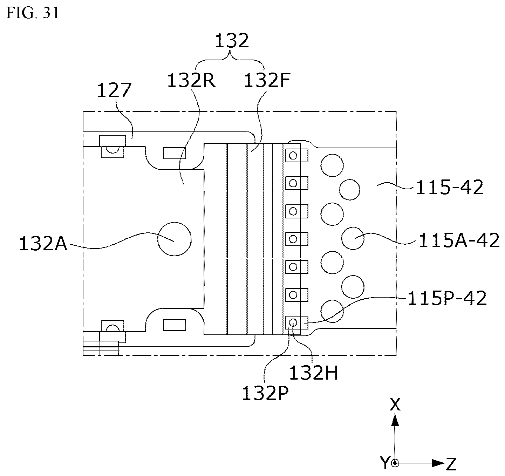

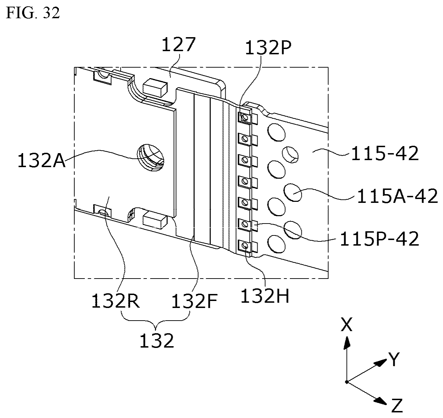

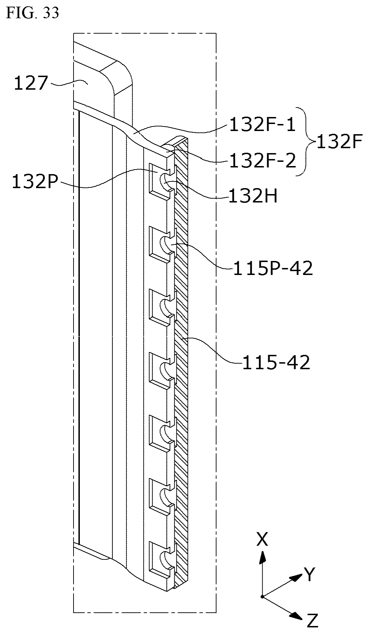

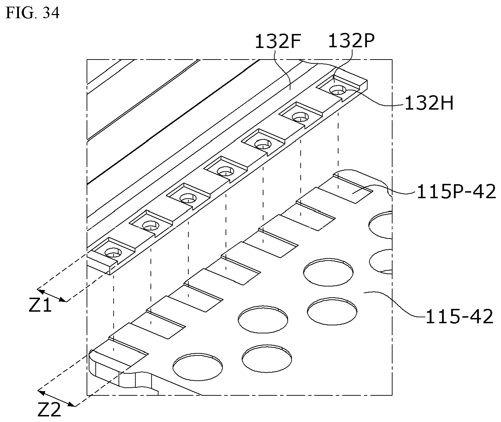

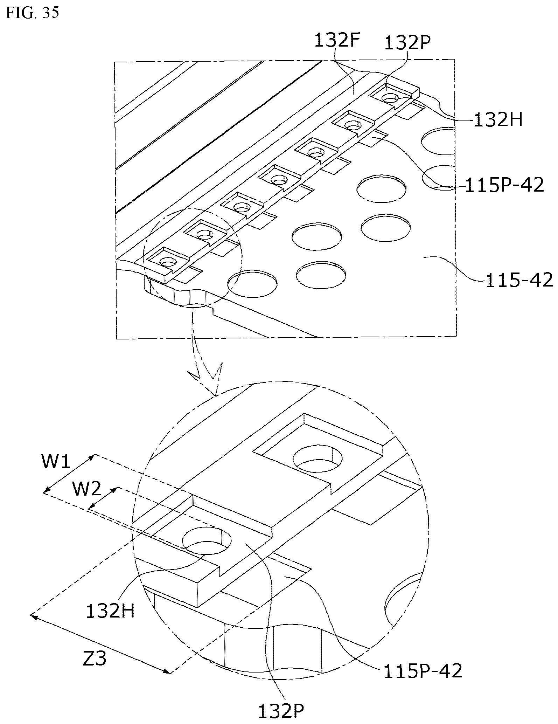

FIG. 28 is a front view of a connection structure of circuit boards according to the embodiment after soldering, FIG. 29 is a perspective view of the connection structure of circuit boards according to the embodiment after soldering, and FIG. 30 is a cross-sectional view of the connection structure of circuit boards according to the embodiment after soldering. FIG. 31 is a front view of a connection structure of circuit boards according to the embodiment before soldering, FIG. 32 is a perspective view of the connection structure of circuit boards according to the embodiment before soldering, and FIG. 33 is a cross-sectional view of the connection structure of circuit boards according to the embodiment before soldering. FIG. 34 is an exploded view for describing a connection structure of circuit boards according to the embodiment, and FIG. 35 is an enlarged perspective view of a part of the connection structure of circuit boards.

Referring to FIGS. 28 to 35, a plurality of first pads 132P of the first circuit board 132 and a plurality of second pads 115P-42 of the second circuit board 115-42 are electrically connected by soldering.

As described above, the first circuit board 132 may be the second unit main board 132 and may be a circuit board electrically connected to the image sensor IS. The second circuit board 115-42 may be the second sub-board 115-42 and may be a circuit board for the first camera actuator 110.

The first circuit board 132, which is the second unit main board 132, may be folded from the first unit main board 131 on which the image sensor IS is disposed and may be disposed on the side surface of the second camera actuator 120. The first circuit board 132 may be a multilayer PCB, and a partial region 132F may include only an FPCB, while the remaining region 132R may include an FPCB and an RPCB that overlap in the Y-axis direction. For example, the first circuit board 132 may include a common FPCB, and an RPCB may be disposed on at least one surface of both surfaces of some regions of the common FPCB.

According to the embodiment of the present invention, the plurality of first pads 132P may be disposed in the region 132 of the first circuit board 132 including only an FPCB and may be joined to the plurality of second pads 115P-42 of the second circuit board 115-42.

For this purpose, one end of the region 132F including only an FPCB may be disposed on the second circuit board 115-42 and may extend to the remaining region 132R including an FPCB and an RPCB. Accordingly, the region 132F including only an FPCB of the first circuit board 132 may include a first region 132F-1 disposed to overlap the second circuit board 115-42 in the Z-axis direction and a second region 132F-2 disposed to overlap the second circuit board 115-42 in the Y-axis direction, and the plurality of first pads 132P may be disposed in the second region 132F-2. That is, the second region 132F-2 may be disposed on the second circuit board 115-42, and the first region 132F-1 may be disposed on the circuit board 127 for the second camera actuator 120 by extending in a direction from the second region 132F-2 toward the image sensor IS. Accordingly, since the first circuit board 132 may be flexibly bent in accordance with a height of the second circuit board 115-42, stable connection between the first circuit board 132 and the second circuit board 115-42 is possible.

Here, a positioning hole 132A may be disposed in the remaining region 132R including an FPCB and an RPCB. The position of the first circuit board 132 may be aligned through the positioning hole 132A.

According to the embodiment of the present invention, the first circuit board 132 may include the plurality of first pads 132P formed at one end of the first circuit board 132. Here, one end of the first circuit board 132 may be the second region 132F-2 that overlaps the second circuit board 115-42 in the Y-axis direction in the region 132F including only an FPCB of the first circuit board 132. That is, one end of the first circuit board 132 may be a side opposite to a side that is connected to the first unit main board 131 of both ends of the first circuit board 132 in the Z-axis direction. That is, one end of the first circuit board 132 may be a surface that is disposed in a direction away from the image sensor IS of both ends of the first circuit board 132 in the Z-axis direction. The plurality of first pads 132P may be disposed spaced apart from each other in the X-axis direction perpendicular to the Z-axis direction. The plurality of first pads 132P may be exposed through notches formed in the outermost layer of the first circuit board 132. Here, the outermost layer of the first circuit board 132 may be an insulating layer.

The second circuit board 115-42 may include the plurality of second pads 115P-42 formed at one end of the second circuit board 115-42. That is, one end of the second circuit board 115-42 may include a region that overlaps the first circuit board 132 in the Y-axis direction. One end of the second circuit board 115-42 may be a surface that is disposed to face the image sensor I of both ends of the second circuit board 115-42 in the Z-axis direction S. The plurality of second pads 115P-42 may be disposed spaced apart from each other in the X-axis direction perpendicular to the Z-axis direction. The plurality of second pads 115P-42 may be exposed through notches formed in the outermost layer of the second circuit board 115-42. Here, the outermost layer of the second circuit board 115-42 may be an insulating layer.

According to the embodiment, the plurality of first pads 132P and the plurality of second pads 115P-42 may correspond in a one-to-one manner, at least some regions of the plurality of first pads 132P and at least some regions of the plurality of second pads 115P-4 may be disposed to overlap each other in the Y-axis direction perpendicular to the Z-axis direction and the X-axis direction, and the plurality of first pads 132P and the plurality of second pads 115P-42 may be soldered.

Accordingly, compared to a case where the plurality of first pads 132P and the plurality of second pads 115P-42 are aligned in the Z-axis direction, but are disposed not to overlap each other in the Y-axis direction, the probability of occurrence of a soldering defect as a distance between an end of the first circuit board 132 and an end of the second circuit board 115-42 increases during the soldering process can be reduced, and the problem of the end of the first circuit board 132 and the end of the second circuit board 115-42 being separated from each other after soldering due to external influences such as vibration can be minimized.

According to the embodiment, a sum z1+z2 of lengths in the Z-axis direction of first pads and second pads disposed to overlap each other in the Y-axis direction among the plurality of first pads 132P and the plurality of second pads 115P-42 may be greater than lengths z3 in the Z-axis direction of the first pad and the second pad in the Y-axis direction in a state of overlapping each other in the Y-axis direction. Accordingly, compared to the case where the plurality of first pads 132P and the plurality of second pads 115P-42 are aligned in the Z-axis direction, but are disposed not to overlap each other in the Y-axis direction, a required amount of solder may be significantly reduced.

According to the embodiment, a hole 132H passing through each of the plurality of first pads 132P may be formed in each of the plurality of first pads 132P, each of the holes 132H may be disposed in each of the plurality of second pads 115P-42, and solder may be disposed in the hole 132H. Accordingly, when soldering the plurality of first pads 132P and the plurality of second pads 115P-42, solder S may flow through the hole 132H and may be disposed between lower surfaces of the plurality of first pads 132P and upper surfaces of the plurality of second pads 115P-42. Accordingly, since a contact area between the plurality of first pads 132P and the plurality of second pads 115P-42 increases, the bonding strength between the plurality of first pads 132P and the plurality of second pads 115P-42 may be improved, and the electrical resistance between the plurality of first pads 132P and the plurality of second pads 115P-42 may be reduced.

At this time, a width W2 of the hole 132H may be 40 to 70% of a width W1 of each of the first pads 132P. When the width W2 of the hole 132H is less than 40% of the width W1 of each of the first pads 132P, not only is it difficult to process the hole 132H, but it may also be difficult for the solder S to permeate into the hole 132H. When the width W2 of the hole 132H exceeds 70% of the width W1 of each of the first pads 132P, an actual area of the first pad 132P is reduced such that poor contact may occur between the first circuit board 132 and the second circuit board 115-42.

According to the embodiment, a maximum height of the solder S in the Y-axis direction after soldering may be lower than a maximum height of the first circuit board 132 in the Y-axis direction or may be 1.2 times or less the maximum height of the first circuit board 132 in the Y-axis direction. This is because the solder S flows through the hole 132H during soldering such that excess solder is minimized. Accordingly, it is possible to prevent the problem of excess solder overflowing to another neighboring first pad and electrically connecting the plurality of first pads 132P to each other. In addition, when a height of the solder S is limited as in the embodiment, the possibility of contact with the shield can or the cover member is reduced. Thus, the possibility of a short circuit with the shield can or the cover member may be minimized.

According to the embodiment, the second circuit board 115-42 may further include a plurality of test grooves 115A-42. The plurality of test grooves 115A-42 may be formed in a form in which a conductive layer is exposed by holes formed in the outermost layer of the second circuit board 115-42. Each of the test grooves 115A-42 is connected to each of the second pads 115P-42, and each of the test grooves 115A-42 may be used for testing the electrical connection between each of the first pads 132P and each of the second pads 115P-42. Accordingly, the numbers of the plurality of first pads 132P, the plurality of second pads 115P-42, and the plurality of test grooves 115A-42 may all be the same.

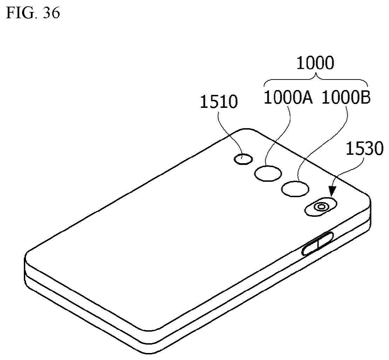

FIG. 36 is a perspective view of a mobile terminal to which the camera module according to the embodiment is applied.

As shown in FIG. 36, a mobile terminal 1500 in the embodiment may include a camera module 1000 (or camera device 100), a flash module 1530, and an auto-focus device 1510 provided on a rear surface thereof.

The camera module 1000 may include an image capturing function and an auto-focus function. For example, the camera module 1000 may include an auto-focus function using an image.

The camera module 1000 processes image frames of still or moving images obtained by an image sensor in a capturing mode or a video call mode.

The processed image frames may be displayed on a predetermined display unit and stored in a memory. A camera (not shown) may also be disposed on the front of a body of a mobile terminal.

For example, the camera module 1000 may include a first camera module 1000A and a second camera module 1000B, and OIS along with an AF or zoom function may be implemented by the first camera module 1000A.

The flash module 1530 may include a light-emitting element that emits light therein. The flash module 1530 may be operated by the operation of the camera of the mobile terminal or through the user's control.

The auto-focus device 1510 may include one of packages of surface-light-emitting laser devices as a light-emitting unit.

The auto-focus device 1510 may include an auto-focus function using a laser. The auto-focus device 1510 may be mainly used in conditions where it is difficult to use the auto-focus function using the image of the camera module 1000, for example, in a close range of 10 m or less or in a dark environment.

The auto-focus device 1510 may include a light emitting unit including a vertical cavity surface emitting laser (VCSEL) semiconductor device and a light receiving unit that converts light energy into electrical energy, such as a photodiode.

A camera device according to the embodiment of the present invention includes an image sensor, a first circuit board electrically connected to the image sensor, a first camera actuator, and a second circuit board electrically connected to the first camera actuator, wherein one end of the first circuit board includes a plurality of first pads extending in a first direction and disposed spaced apart from each other in a second direction perpendicular to the first direction, one end of the second circuit board includes a plurality of second pads extending in the first direction and disposed spaced apart from each other in the second direction, the plurality of first pads and the plurality of second pads correspond in a one-to-one manner, at least some regions of the plurality of first pads and at least some regions of the plurality of second pads are disposed to overlap each other in a third direction perpendicular to the first direction and the second direction, the plurality of first pads and the plurality of second pads are soldered, a hole is formed in each of the plurality of first pads, and the hole is disposed in each of the plurality of second pads.

A sum of lengths in the first direction of the first pads and the second pads disposed to overlap each other in the third direction among the plurality of first pads and the plurality of second pads may be greater than lengths in the first direction of the first pads and the second pads in a state of overlapping each other.

One end of the first circuit board may be disposed on one end of the second circuit board.

Solder may be disposed in the hole of the first pad.

The solder may be disposed in the hole, on lower surfaces of the plurality of first pads, and on upper surfaces of the plurality of second pads.

A width of the hole may be 40 to 70% of a width of each of the plurality of first pads.

One end of the first circuit board may be an FPCB.

The first circuit board may include an FPCB, a first region of the FPCB may be disposed to overlap the second circuit board in the first direction, a second region of the FPCB may be disposed to overlap the second circuit board in the third direction, and the first pad may be disposed in the second region of the FPCB.

The first direction may be an optical axis direction.

The first camera actuator may be an optical image stabilization (OIS) actuator.

The first circuit board includes a 1-1 circuit board disposed to extend in a direction perpendicular to the first direction from a lower surface of the image sensor, and a 1-2 circuit board connected to the 1-1 circuit board and disposed to extend in the first direction, and the plurality of first pads may be disposed on the 1-2 circuit board.

The camera device may further include a second camera actuator disposed between the image sensor and the first camera actuator, in which the 1-1 circuit board, the image sensor, the second camera actuator, and the first camera actuator may be sequentially disposed in the first direction, and the 1-2 circuit board may be disposed on a side surface of the second camera actuator.

The first camera actuator may be an OIS actuator, and the second camera actuator may be a zoom actuator or an AF actuator.

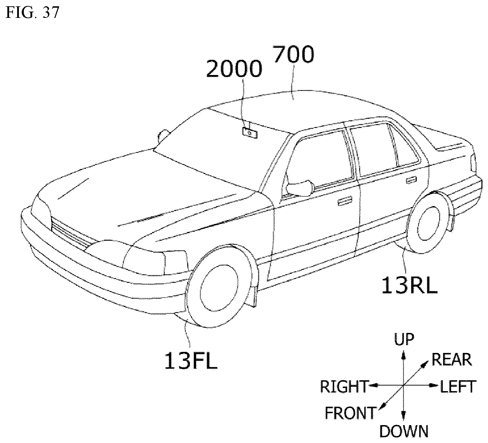

FIG. 37 is a perspective view of a vehicle to which the camera module according to the embodiment is applied.

For example, FIG. 37 is an exterior view of the vehicle including a vehicle driving assistance device to which the camera module 1000 (or camera device 100) according to the embodiment is applied.

Referring to FIG. 37, a vehicle 700 in the embodiment may include wheels 13FL and 13FR that rotate by a power source and a predetermined sensor. The sensor may be, but is not limited to, a camera sensor 2000.

The camera sensor 2000 may be a camera sensor to which the camera module 1000 according to the embodiment is applied. The vehicle 700 in the embodiment may obtain image information through the camera sensor 2000 that captures a front image or a surrounding image and use the image information to determine a lane non-identification situation and create a virtual lane when the lane is not identified.

For example, the camera sensor 2000 may capture the front of the vehicle 700 to obtain the front image and the processor (not shown) may analyze objects included in the front image to obtain image information.

For example, when objects such as lanes, adjacent vehicles, traffic obstructions, and center dividers, curbs, and street trees which correspond to indirect road markings are captured in the image captured by the camera sensor 2000, the processor may detect these objects and include information regarding these objects in the image information. At this time, the processor may obtain distance information to an object detected through the camera sensor 2000 to further supplement the image information.

The image information may be information regarding an object captured in an image. The camera sensor 2000 may include an image sensor and an image processing module.

The camera sensor 2000 may process still images or moving images obtained by an image sensor (for example, a CMOS or a CCD).

The image processing module may process still images or moving images obtained through an image sensor, extract necessary information, and transmit the extracted information to the processor.

At this time, although the camera sensor 2000 may include a stereo camera to improve the measurement accuracy of the object and secure more information such as the distance between the vehicle 700 and the object, the present invention is not limited thereto.

Although the embodiments have been mainly described above, these are merely examples and are not intended to limit the present invention, and it can be seen by those skilled in the art that various modifications and applications not exemplified herein are possible without departing from the essential characteristics of the present invention. For example, each of the components specifically shown in the embodiments may be modified and implemented. Further, it should be interpreted that differences related to the modifications and the applications are included in the scope of the present invention defined by the appended claims.

## Claims

1. A camera module comprising:
a first actuator, a second actuator, and an image sensor that are sequentially disposed in an optical axis direction; and
a circuit board disposed near the first actuator and the second actuator,
wherein the circuit board includes:
a first circuit board portion on which the image sensor is seated; and
a second circuit board portion connected to the first circuit board portion and extending in the optical axis direction, and
the second circuit board portion overlaps the first actuator and the second actuator in a direction perpendicular to the optical axis direction and is connected to the first actuator.

2. The camera module of claim 1, wherein a length of the first actuator in the direction perpendicular to the optical axis direction is smaller than a length of the second actuator in the direction perpendicular to the optical axis direction.

3. The camera module of claim 1, wherein the second circuit board portion includes:
a first region located at an outermost side; and
a second region inside the first region.

4. The camera module of claim 3, wherein the second circuit board portion includes:
a common board;
a first individual board disposed in the first region; and
a second individual board disposed in the second region.

5. The camera module of claim 4, wherein the first individual board has a length in the optical axis direction that is 0.5 times or more a length of the common board in the optical axis direction in the first region.

6. The camera module of claim 5, wherein the second individual board has a length in the optical axis direction that is 0.5 times or less a length of the common board in the optical axis direction in the second region.

7. The camera module of claim 1, wherein the circuit board includes a third circuit board portion extending in the direction perpendicular to the optical axis direction from the second circuit board portion and including a first connector, and
the second circuit board portion includes a second connector that overlaps and is connected to the first actuator in the direction perpendicular to the optical axis direction.

8. The camera module of claim 7, wherein the first actuator includes a first board portion disposed on a side surface, and
the second actuator includes a second board portion disposed on a side surface.

9. The camera module of claim 8, wherein the first board portion is pin-coupled and electrically connected to the second connector.

10. The camera module of claim 8, wherein the first actuator includes a first driving unit disposed on the first board portion,
the first driving unit is disposed spaced apart from the second connector, and
the first driving unit is disposed offset from the second connector in the direction perpendicular to the optical axis direction.
